# EUROPEAN PATENT APPLICATION

(11) **EP 4 140 633 A1**
(43) Date of publication of application: **01.03.2023**
(21) Application number: 20932810.3
(22) Date of filing: 22.04.2020
(51) Int. Cl.: B23K 26/34, B23K 26/21

(54) **PROCESSING SYSTEM**

(71) Applicant: NIKON CORPORATION, Minato-ku Tokyo 108-6290 (JP)
(72) Inventor: UENO, Kazuki, Tokyo 108-6290 (JP)
(74) Representative: Hoffmann Eitle
(86) International application number: PCT/JP2020/017292
(87) International publication number: WO 2021/214899

(57) **Abstract**

A processing system is a processing system that is configured to process an object by using an energy beam, and includes: an irradiation optical system that includes a condensing optical system and that is configured to condense the energy beam entering a pupil plane of the condensing optical system to irradiate the object with it; and a detection apparatus that is configured to detect, through the condensing optical system, an object light including a light from the object, at least a part of a path of the object light in the condensing optical system is different from at least a part of a path of the energy beam in the condensing optical system.

## Description

### Technical Field

The present invention relates to a technical field of a processing system that is configured to process an object, for example.

### Background Art

A Patent Literature 1 discloses one example of a processing system that is configured to process an object. Specifically, the Patent Literature 1 discloses a processing system that is configured to perform an additive processing on a workpiece by supplying a material powder to the workpiece that is one example of the object and by irradiating it with a laser light. One of a technical problem of this processing system is to properly process the object that is a processing target.

### Citation List

### Patent Literature

Patent Literature 1: US2019/270246A1

### Summary of Invention

A first aspect provides a processing system that is configured to process an object by using an energy beam, wherein the processing system includes: an irradiation optical system that includes a condensing optical system and that is configured to condense the energy beam entering a pupil plane of the condensing optical system to irradiate the object with it; and a detection apparatus that is configured to detect, through the condensing optical system, an object light including a light from the object, at least a part of a path of the object light in the condensing optical system is different from at least a part of a path of the energy beam in the condensing optical system.

A second aspect provides a processing system that is configured to process an object by using an energy beam, wherein the processing system includes: an irradiation optical system that is configured to irradiate the object with a plurality of energy beams as the energy beam; and a beam characteristic change apparatus that is configured to change a characteristic of at least one of the plurality of energy beams individually.

A third aspect provides a processing system that is configured to process an object by using an energy beam, wherein the processing system includes: an irradiation optical system that is configured to irradiate the object with a plurality of energy beams as the energy beam; and a beam characteristic change apparatus that is configured to change a characteristic of at least one of the plurality of energy beams, the characteristic of a first energy beam of the plurality of energy beams being different from the characteristic of a second energy beam of the plurality of energy beams.

A fourth aspect provides a processing system that is configured to process an object by using an energy beam, wherein the processing system includes: an irradiation optical system that is configured to irradiate the object with a plurality of energy beams as the energy beam; and a beam characteristic change apparatus that is configured to change a characteristic of at least one of the plurality of energy beams, the beam characteristic change apparatus being configured to set the characteristic of a first energy beam of the plurality of energy beams to be different from the characteristic of a second energy beam of the plurality of energy beams.

A fifth aspect provides a processing system that is configured to process an object by using an energy beam, wherein the processing system includes: an irradiation optical system that is configured to irradiate the object with a plurality of energy beams as the energy beam; and a beam characteristic change apparatus that is configured to set a characteristic of a first energy beam of the plurality of energy beams to be different from a characteristic of a second energy beam of the plurality of energy beams.

A sixth aspect provides a processing system that is configured to process an object by using an energy beam, wherein the processing system includes: an irradiation optical system that is configured to irradiate the object with a plurality of energy beams as the energy beam; and a distance change apparatus that is configured to a distance between a plane on which the plurality of energy beams overlap with each other and a surface of the object to thereby change a distribution of the energy beam on the surface of the object.

An operation and another advantage of the present invention will be apparent from an example embodiment described below.

### Brief Description of Drawings

[FIG. 1] FIG. 1 is a cross-sectional view that illustrates a configuration of a processing system in a first example embodiment.
[FIG. 2] FIG. 2 is a system configuration diagram that illustrates a system configuration of the processing system in the first example embodiment.
[FIG. 3] FIG. 3 is a cross-sectional view that illustrates a configuration of a processing head (namely, an irradiation optical system and a material nozzle).
[FIG. 4] FIG. 4 is a cross-sectional view that illustrates a configuration of the processing head (namely, the irradiation optical system and the material nozzle).
[FIG. 5] FIG. 5 is a cross-sectional view that illustrates optical paths of processing lights in a virtual optical plane in a condensing optical system that intersects with an optical axis of the condensing optical system.
[FIG. 6] FIG. 6 is a cross-sectional view that illustrates another example of the optical paths of the processing lights with which the workpiece is irradiated through the condensing optical system.
[FIG. 7] FIG. 7 is a cross-sectional view that illustrates another example of areas through which the processing lights EL#1 to EL#4 pass in an optical plane OP.
[FIG. 8] FIG. 8A is a planar view that illustrates the processing lights with which the workpiece is irradiated and FIG. 8B is a cross-sectional view that illustrates the processing lights with which the workpiece is irradiated.
[FIG. 9] FIG. 9A is a planar view that illustrates the processing lights with which the workpiece is irradiated and FIG. 9B is a cross-sectional view that illustrates the processing lights with which the workpiece is irradiated.
[FIG. 10] Each of FIG. 10A to FIG. 10E is a cross-sectional view that illustrates an aspect when a certain area on the workpiece is irradiated with the processing light and build materials are supplied thereto.
[FIG. 11] Each of FIG. 11A to FIG. 11C is a cross-sectional view that illustrates a process for forming a three-dimensional structural object.
[FIG. 12] FIG. 12 is a planar view that illustrates target irradiation areas (namely, irradiation positions of the processing lights) moving toward a +Y side along a Y axis direction on a build surface.
[FIG. 13] Each of FIG. 13A and FIG. 13B is a graph that illustrates intensities of the processing light with which a position at a relatively rear side along a moving direction is irradiated and the processing light with which a position at a relatively front side along the moving direction is irradiated.
[FIG. 14] FIG. 14 is a graph that illustrates the intensities of the processing light with which the position at the rear side relative to the moving direction is irradiated and the processing light with which the position at the front side relative to the moving direction is irradiated.
[FIG. 15] Each of FIG. 15A and FIG. 15B is a cross-sectional view that illustrates an aspect in which the processing lights are emitted toward the target irradiation areas set on the build surface.
[FIG. 16] FIG. 16 is a cross-sectional view that illustrates the optical paths of the processing lights in the virtual plane in the condensing optical system that intersects with the optical axis of the condensing optical system.
[FIG. 17] FIG. 17 is a planar view that illustrates one example of a desired-shaped beam spot formed by the plurality of processing lights on the build surface.
[FIG. 18] FIG. 18 is a cross-sectional view that illustrates a configuration of a processing system in a second example embodiment.
[FIG. 19] FIG. 19 is a system configuration diagram that illustrates a system configuration of the processing system in the second example embodiment.
[FIG. 20] FIG. 20 is a cross-sectional view that illustrates optical paths of a measurement light and an object light in the irradiation optical system (especially, in the condensing optical system) in the second example embodiment.
[FIG. 21] FIG. 21 is a XX-XX' cross-sectional view of FIG. 20.
[FIG. 22] FIG. 22 is a system configuration diagram that illustrates a system configuration of the processing system in a third example embodiment.
[FIG. 23] FIG. 23 is a cross-sectional view that illustrates a configuration of an irradiation optical system in the third example embodiment.
[FIG. 24] Each of FIG. 24A to FIG. 24C is a cross-sectional view that illustrates an example of the optical path of the measurement light with which the build surface is irradiated.
[FIG. 25] FIG. 25 is a system configuration diagram that illustrates a system configuration of a processing system in a fourth example embodiment.
[FIG. 26] FIG. 26 is a cross-sectional view that illustrates optical paths of the measurement light and a returned light in the irradiation optical system (especially, the condensing optical system) in the fourth example embodiment.
[FIG. 27] FIG. 27 is a XXVI-XXVI' cross-sectional view of FIG. 26.
[FIG. 28] FIG. 28 is a system configuration diagram that illustrates a system configuration of a processing system in a fifth example embodiment.
[FIG. 29] FIG. 29 is a planar view that conceptionally illustrates operations of a collection apparatus and a gas supply apparatus in the fifth example embodiment.
[FIG. 30] FIG. 30 is a system configuration diagram that illustrates a system configuration of a processing system in a sixth example embodiment.
[FIG. 31] FIG. 31 is a cross-sectional view that illustrates a configuration of a surrounding member in the sixth example embodiment.
[FIG. 32] FIG. 32 is a system configuration diagram that illustrates a system configuration of a processing system in a seventh example embodiment.
[FIG. 33] FIG. 33 is a cross-sectional view that illustrates a configuration of the processing system in the seventh example embodiment.

### Description of Embodiments

Next, with reference to drawings, a processing system SYS that is one example embodiment of a processing system in the present invention will be described. In the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Processing System SYS in First Example Embodiment

Firstly, the processing system SYS in a first example embodiment (hereinafter, the processing system SYS in the first example embodiment is referred to as a "processing system SYSa") will be described. The processing system SYSa in the first example embodiment is a processing system that is configured to form a three-dimensional structural object ST by performing an additive processing. The processing system SYSa is configured to form the three-dimensional structural object ST by performing the additive processing based on a LMD (Laser Metal Deposition), for example. Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming. However, the processing system SYSa may form the three-dimensional structural object ST by performing the additive processing based on another additive processing method.

Next, a configuration and an operation of the processing system SYSa performing the additive processing will be described in order.

### (1-1) Configuration of Processing System SYSa

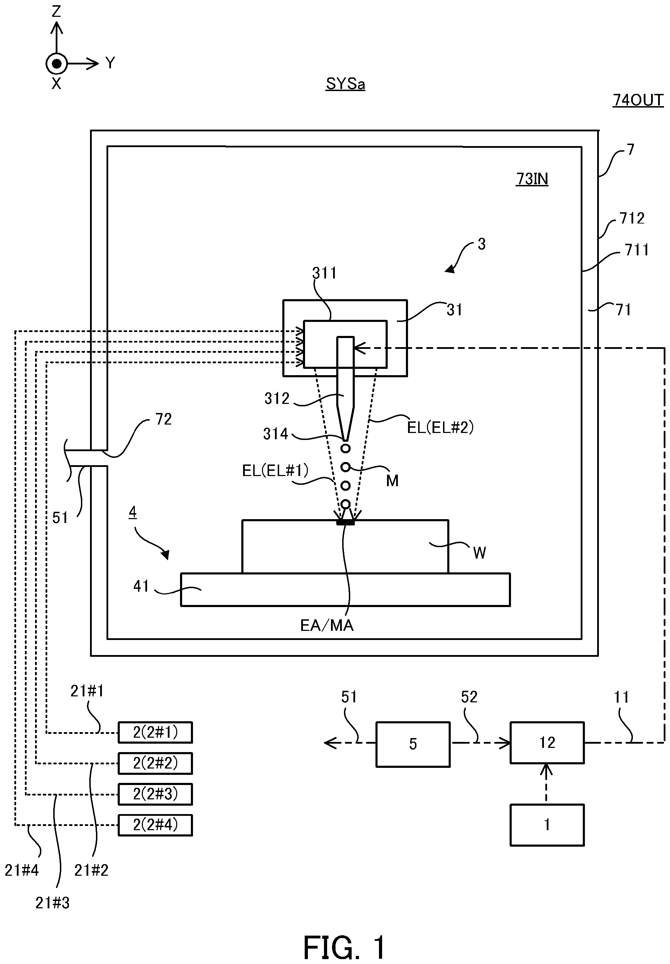

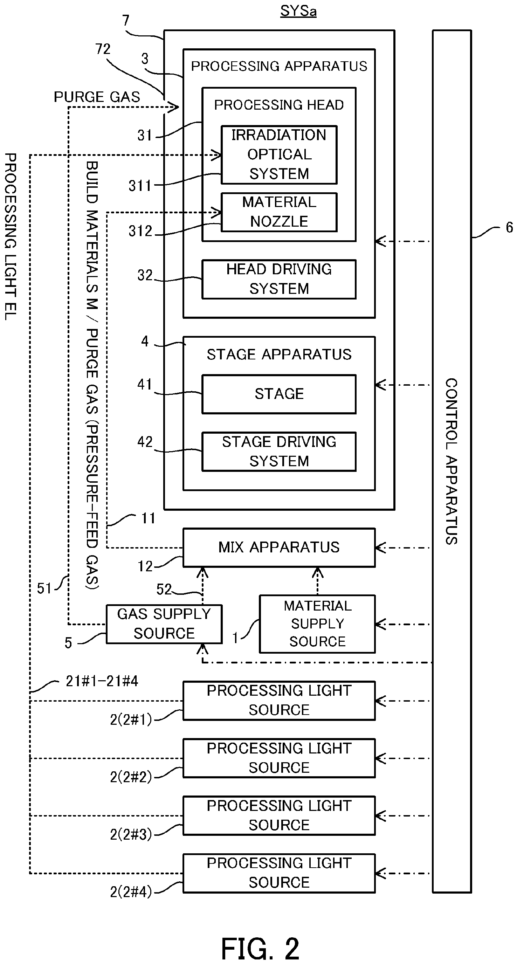

Firstly, with reference to FIG. 1 and FIG. 2, a configuration of the processing system SYSa in the first example embodiment will be described. FIG. 1 is a cross-sectional view that conceptionally illustrates one example of the configuration of the processing system SYSa in the first example embodiment. FIG. 2 is a system configuration diagram that illustrates a system configuration of the processing system SYSa in the first example embodiment.

The processing system SYSa is configured to form the three-dimensional structural object ST (namely, a three-dimensional object having a size in each of three-dimensional directions, a solid object, in other words, an object having a size in the X axis direction, the Y axis direction and the Z axis direction). The processing system SYSa is configured to form the three-dimensional structural object ST on the workpiece W that is a base (namely, a base member) for forming the three-dimensional structural object ST. The processing system SYSa is configured to form the three-dimensional structural object ST by performing the additive processing on the workpiece W. When the workpiece W is a below described stage 41, the processing system SYSa is configured to form the three-dimensional structural object ST on the stage 41. When the workpiece W is a placed object that is an object placed on the stage 41, the processing system SYSa is configured to form the three-dimensional structural object ST on the placed object. In this case, the processing system SYSa may form the three-dimensional structural object ST that is integrated with the placed object. An operation for forming the three-dimensional structural object ST that is integrated with the placed object is equivalent to an operation for adding a new structural object to the placed object. Note that the existing structural object may be an item that needs to be repaired having a missing part, for example. The processing system SYSa may form the three-dimensional structural object on the item that needs to be repaired to fill in the missing part of the item that needs to be repaired. Alternatively, the processing system SYSa may form the three-dimensional structural object ST that is separable from the placed object. The placed object placed on the stage 41 may be another three-dimensional structural object ST (namely, an existing structural object) formed by the processing system SYSa. In the below described description, an example in which the workpiece W is the placed object placed on the stage 41 will be described. Incidentally, in the below described description, the workpiece W means both of the workpiece W on which the three-dimensional structural object ST is not formed and the workpiece W on which at least a part of the three-dimensional structural object ST has been formed (namely, the workpiece W including at least a part of the three-dimensional structural object ST that has been formed).

As described above, the processing system SYSa is configured to form the three-dimensional structural object ST by the Laser Metal Deposition. Namely, it can be said that the processing system SYSa is a 3D printer that forms an object by using an Additive layer manufacturing technique. Note that the Additive layer manufacturing technique may be referred to as a Rapid Prototyping, a Rapid Manufacturing or an Additive Manufacturing.

The processing system SYSa forms a build object by processing a build material M with a processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery materials. However, the build materials M may not be the powdery materials. For example, a wired-like build material or a gas-like build material may be used, as the build material M, for example.

In order to form the three-dimensional structural object ST, the processing system SYSa includes a material supply source 1, a plurality of processing light sources 2, a processing apparatus 3, a stage apparatus 4, a gas supply source 5 and a control apparatus 6, as illustrated in FIG. 1 and FIG. 2. The processing apparatus 3, the stage apparatus 4 may be housed in a chamber space 73IN in the housing 7.

The material supply source 1 is configured to supply the build materials M to the processing apparatus 3. The material supply source 1 supplies, to the processing apparatus 3, the build materials M the amount of which is necessary for forming the three-dimensional structural object ST per unit time by supplying the build materials M the amount of which is based on the necessary amount.

Each of the plurality of processing light sources 2 is configured to emit at least one of an infrared light, a visible light and a ultraviolet light as the processing light EL, for example. However, another type of light may be used as the processing light EL. The processing light EL may include a pulsed light (namely, a pulsed beam). The processing light EL may be a laser light. In this case, each of the plurality of the processing light sources 2 may include a laser light source (for example, a semiconductor laser such as a laser diode (LD). The laser light source may include a fiber laser, a CO₂ laser, a YAG laser, an Excimer laser and the like. However, the processing light EL may not be the laser light. In this case, the processing light source 2 may include any light source (for example, at least one of a LED (Light Emitting Diode), a discharge lamp and the like). Note that the first example embodiment illustrates an example in which the processing system SYSa include four processing light sources 2 (specifically, a processing light source 2#1 emitting a processing light EL#1, a processing light source 2#2 emitting a processing light EL#2, a processing light source 2#3 emitting a processing light EL#3 and a processing light source 2#4 emitting a processing light EL#4). However, the number of the processing light source 2 may be equal to or larger than 3 or may be equal to or larger than 5.

The processing apparatus 3 forms the three-dimensional structural object ST by processing the build materials M supplied from the material supply source 1 with the processing lights EL#1 to EL#4 transmitted from the processing light sources 2#1 to 2#4, respectively. In order to form the three-dimensional structural object ST, the processing apparatus 3 include a processing head 31 and a head driving system 32. However, the processing apparatus 3 may not include the head driving system 32. Furthermore, the processing head 31 includes an irradiation optical system 311 and a material nozzle 312 (namely, a material supply apparatus that supplies the build materials M). The processing head 31 and the head driving system 32 are hosed in the chamber space 73IN. However, at least a part of the processing head 31 and / or the head driving system 312 may be disposed in an external space 74OUT that is a space outside the housing 7. Note that the external space 74OUT may be a space into which an operator of the processing system SYSa is allowed to enter.

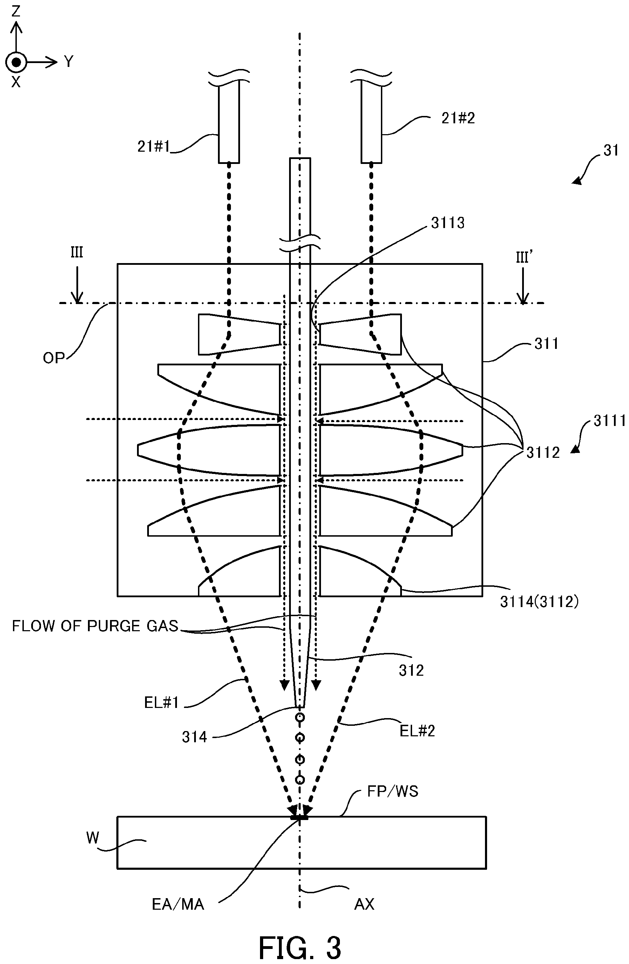

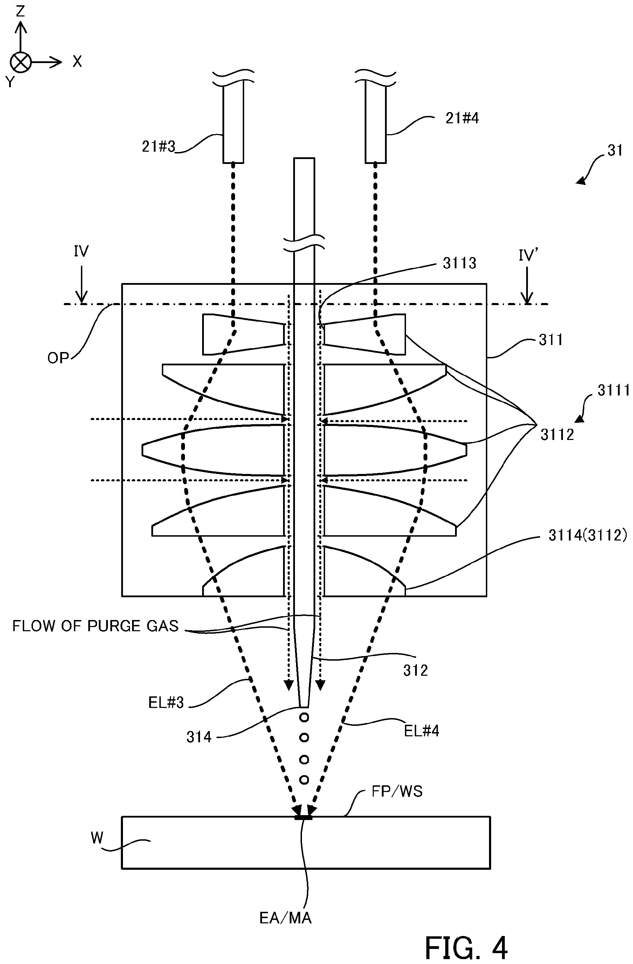

Here, with reference to FIG. 3 and FIG. 4 in addition to FIG. 1 and FIG. 2, the processing head 31 (namely, the irradiation optical system 311 and the material nozzle 312) will be described. FIG. 3 and FIG. 4 are cross-sectional views that illustrate a configuration of the processing head 31 (namely, the irradiation optical system 311 and the material nozzle 312).

As illustrated in FIG. 1 to FIG. 4, the irradiation optical system 311 is an optical system which the processing lights EL#1 to EL#4, which are transmitted from the processing light sources 2#1 to 2#4, respectively, enter. The irradiation optical system 311 is an optical system for emitting the processing lights EL#1 to EL#4 that enter the irradiation optical system 311. Specifically, the irradiation optical system 311 is optically connected to the processing light sources 2#1 to 2#4 through a plurality of light transmitting members 21 including at least one of an optical fiber, a light pipe and so on. More specifically, the irradiation optical system 311 is optically connected to the processing light source 2#1 through the light transmitting member 21#1, is optically connected to the processing light source 2#2 through the light transmitting member 21#2, is optically connected to the processing light source 2#4 through the light transmitting member 21#3, and is optically connected to the processing light source 2#4 through the light transmitting member 21#4. The irradiation optical system 311 emits the processing lights EL#1 to EL#4 transmitted from the processing light sources 2#1 to 2#4 through the light transmitting members 21#1 to 21#4. The irradiation optical system 311 emits the processing lights EL#1 to EL#4 in a downward direction (namely, toward a -Z side) from the irradiation optical system 311. The stage 41 is disposed below the irradiation optical system 311. When the workpiece W is placed on the stage 41, the irradiation optical system 311 emits the processing lights EL#1 to EL#4 toward the workpiece W.

The irradiation optical system 311 may condenses, on the workpiece W, the processing lights EL#1 to EL#4 emitted toward the workpiece W. In order to condenses the processing lights EL#1 to EL#4, the irradiation optical system 311 may include a condensing optical system 3111. The condensing optical system 3111 is an optical system that includes a plurality of optical members 3112 (for example, lenses), however, may be an optical system that includes a single optical member 3112. The processing lights EL#1 to EL#4 are emitted from a terminal optical member 3114 that is located at the position closest to the workpiece W (in an example illustrated in FIG. 3 and FIG. 4, located at the most -Z side) along optical paths of the processing lights EL#1 to EL#4 among the plurality of optical members 3112 (especially, the plurality of optical members 3112 having a power) of the condensing optical system 3111. Note that the terminal optical member 3114 may be referred to as a final optical member.

The processing lights EL#1 to EL#4 emitted from the condensing optical system 3111 are condensed on a condensed plane FP that are virtual optical plane intersecting with an optical axis AX of the condensing optical system 3111 (namely, an optical axis of the irradiation optical system 311). Thus, the condensing optical system 3111 may be regarded to be an optical system for condensing the processing lights EL#1 to EL#4 entering a pupil plane (an incident pupil plane) of the condensing optical system 3111 on the condensed plane FP of the condensing optical system 3111. Here, a state where "the processing lights EL#1 to EL#4 are condensed on the condensed plane FP" in the first example embodiment may mean a state where "the processing lights EL#1 to EL#4 are overlapped with each other on the condensed plane FP". Namely, the state where "the processing lights EL#1 to EL#4 are condensed on the condensed plane FP" in the first example embodiment may mean a state where "a same position on the condensed plane FP is irradiated with the processing lights EL#1 to EL#4". The condensed plane FP is typically set at a rear focal point position of the condensing optical system 3111. Note that FIG. 3 and FIG. 4 illustrate an example in which the condensed plane FP is set on a surface WS of the workpiece W. Incidentally, the condensed plane FP is a plane that intersects with the Z axis (for example, a plane along the XY plane), because the optical axis AX is an axis along the Z axis. Note that the incident pupil plane of the condensing optical system 3111 is located outside (at an incident side of) the condensing optical system 3111 in this example, however, the incident pupil plane of the condensing optical system 311may be located in the condensing optical system 3111.

The optical paths of the processing lights EL#1 to EL#4 (namely, paths along which the processing lights EL#1 to EL#4 propagate) may be optically separated from each other in the condensing optical system 3111. Namely, the optical paths of the processing lights EL#1 to EL#4 may be different from each other in the condensing optical system 3111. Namely, the optical paths of the processing lights EL#1 to EL#4 may not be overlapped with each other in the condensing optical system 3111.

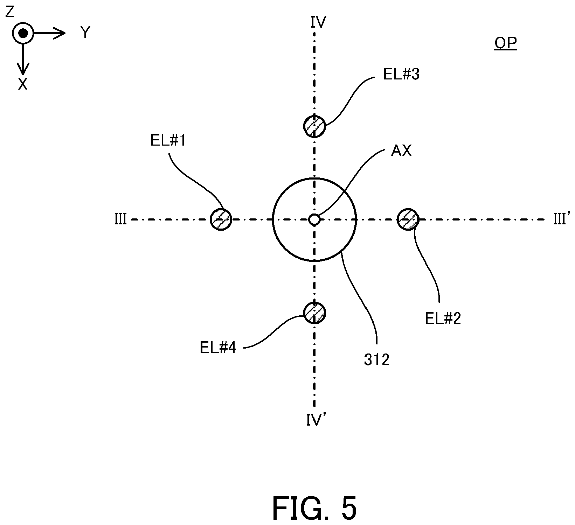

In order to optically separate the optical paths of the processing lights EL#1 to EL#4, for example, as illustrated in FIG. 5 that is a cross-sectional view illustrating the optical paths of the processing lights EL#1 to EL#4 in a virtual optical plane OP (typically, a plane along the XY plane, and the incident pupil plane of the condensing optical system 3111, for example) in the condensing optical system 3111 that intersects with the optical axis AX of the condensing optical system 3111, the processing lights EL#1 to EL#4 may pass through different areas, respectively, that are away from the optical axis AX toward different directions in the optical plane OP. In this case, a distance between the optical axis AX and the optical path of the processing light EL#1, a distance between the optical axis AX and the optical path of the processing light EL#2, a distance between the optical axis AX and the optical path of the processing light EL#3 and a distance between the optical axis AX and the optical path of the processing light EL#4 may be equal to one another in the optical plane OP. Alternatively, the distances between the optical axis AX and the optical paths of at least two of the processing lights EL#1 to EL#4 may be different from each other. In an example illustrated in FIG. 3 to FIG. 5, the distances between the optical axis AX and the optical paths of the processing lights EL#1 to EL#4 are equal to one another in the optical plane OP. In this case, the processing lights EL#1 to EL#4 may pass through areas that are rotationally symmetric about the optical axis AX (areas that are n-fold rotationally symmetric (note that n is an integer that is equal to or larger than 2) about the optical axis AX in the optical plane OP). For example, as illustrated in FIG. 5, the processing lights EL#1 to EL#4 may pass through four areas whose rotational angles along the clockwise direction around an origin are 270 degree, 90 degree, 0 degree and 180 degree (alternatively, θ+270 degree (note that θ is a desired angle), θ+90 degree, θ degree and θ+180 degree) (areas that are 4-fold rotationally symmetric about the optical axis AX in the optical plane OP) in a coordinate plane along the XY plane the origin of which is the optical axis AX.

When the processing lights EL#1 to EL#4 pass through the different areas, respectively, that are away from the optical axis AX toward the different directions in the optical plane OP, the condensing optical system 3111 may emit the processing lights EL#1 to EL#4 toward the workpiece W from different directions. Specifically, as illustrated in FIG. 3 to FIG. 5, the condensing optical system 3111 may emit the processing lights EL#1 to EL#4 toward the workpiece W from positions that are different from one another along a rotational direction around the optical axis AX.

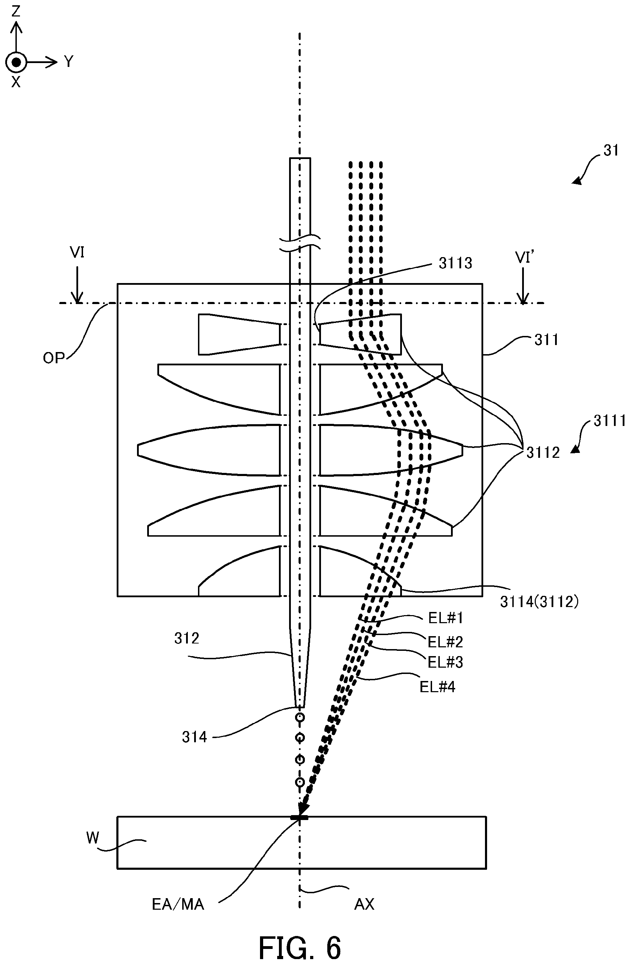

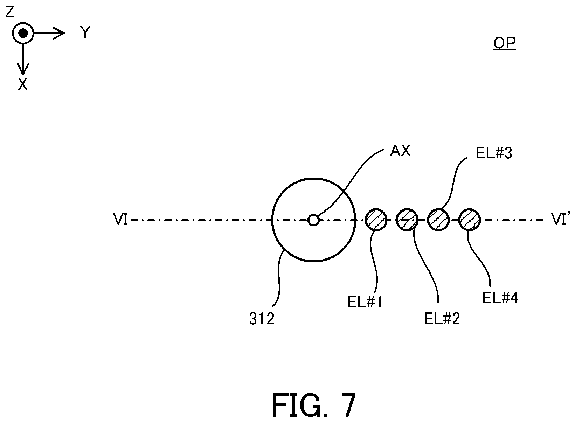

Alternatively, in order to optically separate the optical paths of the processing lights EL#1 to EL#4, the processing lights EL#1 to EL#4 may pass through different areas, respectively, that are away from the optical axis AX toward same direction by different distances in the optical plane OP. For example, as illustrated in FIG. 6 that is a cross-sectional view illustrating another example of the optical paths of the processing light EL#1 to EL#4 with which the workpiece W is irradiated through the condensing optical system 3111 and FIG. 7 that is a cross-sectional view illustrating another example of the areas through which the processing lights EL#1 to EL#4 pass in the optical plane OP, the processing lights EL#1 to EL#4 may pass through different areas, respectively, that are away from the optical axis AX toward the +Y side by different distances. Namely, the processing lights EL#1 to EL#4 may pass through different areas, respectively, that are away from the optical axis AX toward same direction by different distances so that the distance between the optical axis AX and the optical path of the processing light EL#1, the distance between the optical axis AX and the optical path of the processing light EL#2, the distance between the optical axis AX and the optical path of the processing light EL#3 and the distance between the optical axis AX and the optical path of the processing light EL#4 are different from one another.

When the processing lights EL#1 to EL#4 pass through different areas, respectively, that are away from the optical axis AX toward same direction by different distances in the optical plane OP, the condensing optical system 3111 may emit the processing lights EL#1 to EL#4 toward the workpiece W so that angles between the optical axis AX and propagating directions of the processing lights EL#1 to EL#4 propagating from the condensing optical system 3111 to the workpiece W are different from one another. Specifically, as illustrated in FIG. 6, the condensing optical system 3111 may emit the processing lights EL#1 to EL#4 toward the workpiece W so that the angle between the optical axis AX and the propagating direction of the processing light EL#1, the angle between the optical axis AX and the propagating direction of the processing light EL#2, the angle between the optical axis AX and the propagating direction of the processing light EL#3 and the angle between the optical axis AX and the propagating direction of the processing light EL#4 are different from one another.

Note that positions of an emitting port of each of the light transmitting members 21#1 to 21#4 along the XY plane (a plane parallel to the optical plane OP) may be changeable in order to change the propagating directions of the plurality of processing lights EL#1 to EL#4 propagating from the condensing optical system 3111 to the workpiece W. Moreover, positions of the emitting port of each of the light transmitting members 21#1 to 21#4 along the Z axis may be changeable. Moreover, the propagating directions of the processing lights EL#1 to EL#4 emitted from the light transmitting members 21#1 to 21#4 (the propagating directions of the processing lights EL#1 to EL#4 between the condensing optical system and the light transmitting members 21#1 to 21#4) may be changeable.

An aperture 3113, which penetrates each optical member 3112 in a direction along the optical axis AX, is formed at each optical member 3112 included in the condensing optical system 3111. The aperture 3113 may be formed at a position at which the each optical member 3112 overlaps with the optical axis AX. Namely, the aperture 3113 may be formed on the optical axis AX. At least a part of the material nozzle 312 is disposed in the plurality of apertures 3113 that are formed at the plurality of optical members 3112, respectively. At least a part of the material nozzle 312 is inserted into the plurality of apertures 3113. In this case, the material nozzle 312 may be inserted into the apertures 3113 so that a supply outlet 314 at a head of the material nozzle 312 is located outside the apertures 3113. Thus, the material nozzle 312 is disposed so that at least a part of the material nozzle 312 is surrounded by the plurality of optical members 3112. When the apertures 3113 are formed on the optical axis AX, at least a part of the material nozzle 312 may be disposed along the optical axis AX in the apertures 3113. In this case, the at least a part of the material nozzle 312 may be disposed on the optical axis AX.

When the aperture 3113 is formed at each optical member 3112, the processing lights EL#1 to EL#4 pass through a part of each optical member 3112 at which the aperture 3113 is not formed. When the aperture 3113 is formed on the optical axis AX as described above, the processing lights EL#1 to EL#4 pass through a part of each optical member 3112 that is away from the optical axis AX. In this case, the processing lights EL#1 to EL#4 may typically propagate from the condensing optical system 3111 to the workpiece W along directions that are inclined with respect to the optical axis AX. Namely, the condensing optical system 3111 may emit the processing lights EL#1 to EL#4 along the directions that are inclined with respect to the optical axis AX.

When the aperture 3113 is formed at each optical member 3112, a purge gas supplied from the gas supply source 5 to the chamber space 73IN may be supplied to a space at an emitting plane side of the terminal optical member 3114 (namely, a space at the workpiece W side) through the apertures 3113. Specifically, the purge gas supplied from the gas supply source 5 to the chamber space 73IN may be supplied a space between the plurality of optical members 3112 of the condensing optical system 3111. The purge gas supplied to the space between the plurality of optical members 3112 of the condensing optical system 3111 may be supplied to a space at the emitting plane side of the terminal optical member 3114 through the apertures 3113 (especially, the aperture 3113 of the terminal optical member 3114).

The material nozzle 312 has the supply outlet 314. The material nozzle 312 is configured to supply (specifically, inject, jet, blow out or spray) the build materials M from the supply outlet 314. The material nozzle 312 is physically connected to the material supply source 1, which is a supply source of the build materials M, through a supply pipe 11 and a mix apparatus 12. The material nozzle 312 supplies the build materials M supplied from the material supply source 1 through the supply pipe 11 and the mix apparatus 12. The material nozzle 312 may pressure-feed the build materials M supplied from the material supply source 1 through the supply pipe 11. Namely, the build materials M from the material supply source 1 and a gas for feeding (namely, a pressure-feed gas, and an inert gas such as a Nitrogen or an Argon, for example) may be mixed by the mix apparatus 12 and then pressure-fed to the material nozzle 312 through the supply pipe 11. As a result, the material nozzle 312 supplies the build materials M together with the gas for feeding. The purge gas supplied from the gas supply source 5 is used as the gas for feeding, for example. However, a gas supplied from a gas supply apparatus that is different from the gas supply source 5 may be used as the gas for feeding, for example. Note that the material nozzle 312 is illustrated to have a tube-like shape in FIG. 3 and FIG. 4, however, a shape of the material nozzle 312 is not limited to this shape. The material nozzle 312 supplies the build materials M in a downward direction (namely, toward the -Z side) from the material nozzle 312. In this case, since the material nozzle 312 is disposed in the apertures 3113 of the optical members 3112, the material nozzle 312 may be regarded to supply the build materials M through the apertures 3113 of the optical members 3112 (especially, the aperture 3113 of the terminal optical member 3114). The material nozzle 312 may be regarded to supply the build materials M through a space located at an inner position than the optical paths of the processing lights EL#1 to EL#4 that are emitted through the part of the optical members 3112 at which the apertures 3113 are not formed. The stage 41 is disposed below the material nozzle 312. When the workpiece W is placed on the stage 41, the material nozzle 312 supplies the build materials M toward the workpiece W or a vicinity of the workpiece W.

The material nozzle 312 supplies the build materials M toward the workpiece W from a direction that intersects with the surface WS of the workpiece W. In the example illustrated in FIG. 3 and FIG. 4, the material nozzle 312 supplies the build materials M toward the workpiece W from the Z axis direction that intersects with the surface WS of the workpiece W. Namely, the material nozzle 312 supplies the build materials M so that a supply path of the build materials M from the material nozzle 312 to the workpiece W is a path along the Z axis direction. In this case, a direction along which the material nozzle 312 supplies the build materials M toward the workpiece W (namely, a direction along the Z axis direction, an optical axis direction of the condensing optical system 3111) may be different from a direction along which the condensing optical system 3111 emits the processing lights EL#1 to EL#4 toward the workpiece W (namely, a direction that is inclined with respect to the Z axis or the optical axis AX). Namely, a supply direction (it may be referred to as a material supply direction) of the build materials M by the material nozzle 312 may be different from irradiation directions of the processing lights EL#1 to EL#4 by the condensing optical system 3111.

In the present example embodiment, the material nozzle 312 is aligned to the irradiation optical system 311 so as to supply the build materials M to target irradiation areas EA that are irradiated with the processing lights EL#1 to EL#4 by the irradiation optical system 311 (namely, positions that are irradiated with the processing lights EL#1 to EL#4 by the irradiation optical system 311). Namely, the material nozzle 312 is aligned to the irradiation optical system 311 so that the target irradiation areas EA are coincident with (alternatively, at least partially overlaps with) a target supply area MA that is set on the workpiece W or near the workpiece W as an area to which the material nozzle 312 supplies the build materials M. moreover, as described later, a melt pool MP is formed on the workpiece W by the processing lights EL#1 to EL#4 emitted from the irradiation optical system 311. The material nozzle 312 may be aligned to the irradiation optical system 311 so that the material nozzle 312 supplies the build materials M to the melt pool MP. However, the material nozzle 312 may not supply the build materials M to the melt pool MP. For example, the processing system SYSa may melt the build materials M by the processing lights EL#1 to EL#4 from the irradiation optical system 311 before the build materials M from the material nozzle 312 reaches the workpiece W and may allow the molten build materials M to adhere to the workpiece W.

As described above, the apertures 3113 in which the material nozzle 312 is disposed are used as a supply path of the purge gas supplied to the space at the emitting plane side of the terminal optical member 3114. In this case, the purge gas supplied through the apertures 3113 forms a flow of a gas flowing to the supply outlet 314 at the head of the material nozzle 312, for example. As a result, there is a high possibility that the build materials M from the supply outlet 314 are supplied along the supply path directed toward downward direction from the material nozzle 312. Namely, there is a low possibility that the build materials M from the supply outlet 314 are scattered toward all directions from the material nozzle 312. As a result, the material nozzle 312 is capable of properly supplying the build materials M. Namely, the processing system SYSa is capable of improving a directional characteristic of the supply direction of the build materials M.

Again in FIG. 1 and FIG. 2, the head driving system 32 is configured to move the processing head 31. The head driving system 32 moves the processing head 31 along at least one of the X axis, the Y axis, the Z axis, the θX direction, the θY direction and the θZ direction for example. When the head driving system 32 moves the processing head 31, a relative position between the processing head 31 and each of the stage 41 and the workpiece W placed on the stage 41 changes. Namely, a relative position between each of the irradiation optical system 311 and the material nozzle 312 and each of the stage 41 and the workpiece W changes. Furthermore, when the relative position between each of the irradiation optical system 311 and the material nozzle 312 and each of the stage 41 and the workpiece W changes, the target irradiation area EA and the target supply area MA (furthermore, the melt pool MP) move relative to the workpiece W. Thus, the head driving system 32 may serve as a movement apparatus that is configured to move the target irradiation area EA and the target supply area MA (furthermore, the melt pool MP) relative to the workpiece W.

When the head driving system 32 moves the processing head 31 along the Z axis direction (namely, a direction along the optical axis AX of the condensing optical system 3111), a distance DS between the condensed plane FP of the condensing optical system 3111 on which the processing lights EL#1 to EL#4 are condensed and the surface WS of the workpiece W changes. Thus, the head driving system 32 may serve as a movement apparatus that is configured to change the distance DS between the condensed plane FP of the condensing optical system 3111 and the surface WS of the workpiece W in the Z axis direction.

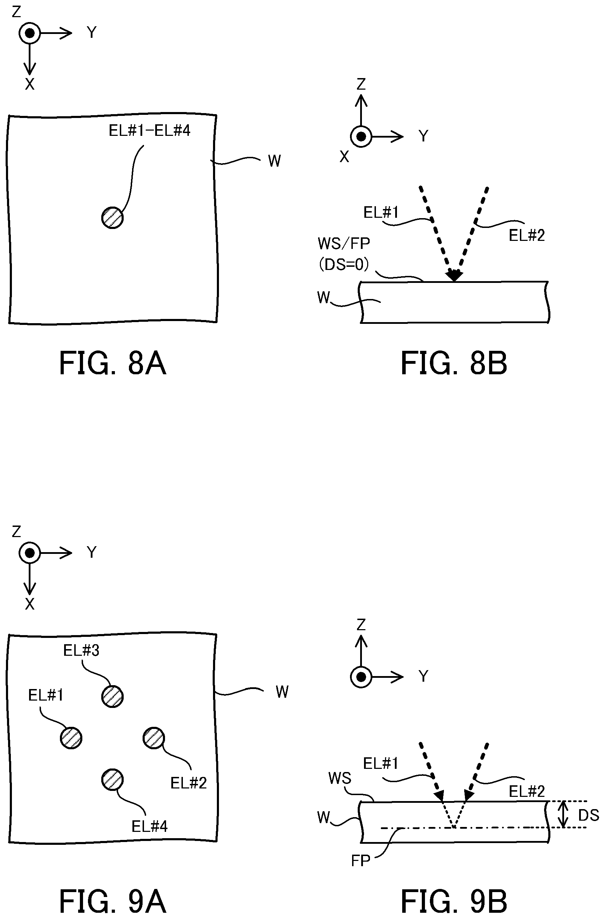

The head driving system 32 may change the distance DS between the condensed plane FP and the surface WS of the workpiece W in the Z axis direction so that the condensed plane FP of the condensing optical system 3111 is located on the surface WS of the workpiece W (alternatively, a build surface MS, the same is applied to the below described description) in the Z axis direction. Namely, the head driving system 32 may change the distance DS so that the distance DS is zero. In this case, as illustrated in FIG. 8A that is a planar view illustrating the processing lights EL#1 to EL#4 with which the workpiece W is irradiated and FIG. 8B that is a cross-sectional view illustrating the processing lights EL#1 to EL#4 with which the workpiece W is irradiated, the processing lights EL#1 to EL#4 are condensed on the surface WS of the workpiece W. Namely, the processing lights EL#1 to EL#4 are overlapped with one another on the surface WS of the workpiece W. In this case, a single beam spot that is irradiated with the processing lights EL#1 to EL#4 is formed on the surface WS of the workpiece W.

The head driving system 32 may change the distance DS between the condensed plane FP and the surface WS of the workpiece W in the Z axis direction so that the condensed plane FP of the condensing optical system 3111 is away from the surface WS of the workpiece W in the Z axis direction. Namely, the head driving system 32 may change the distance DS so that the distance DS is a value that is different from zero. In this case, as illustrated in FIG. 9A that is a planar view illustrating the processing lights EL#1 to EL#4 with which the workpiece W is irradiated and FIG. 9B that is a cross-sectional view illustrating the processing lights EL#1 to EL#4 with which the workpiece W is irradiated, the processing lights EL#1 to EL#4 are not condensed on the surface WS of the workpiece W. Namely, the processing lights EL#1 to EL#4 are not overlapped with one another on the surface WS of the workpiece W. In this case, four single beam spots that are irradiated with the processing lights EL#1 to EL#4, respectively, are formed on the surface WS of the workpiece W. A positional relationship between the four beam spots and sizes of the four beam spots vary depending on the distance between the condensed plane of the condensing optical system 3111 and the surface of the workpiece W in the Z axis direction. Note that the four beam spots are not overlapped with one another in an example illustrated in FIG. 9A, however, at least two of the four beam spots may be partially overlapped with each other. Moreover, the processing lights EL#1 to EL#4 do not intersect with one another in the example illustrated in FIG. 9A, however, the surface WS of the workpiece W may be irradiated with the processing lights EL#1 to EL#4 in a state the processing lights EL#1 to EL#4 are separated from one another after the processing lights EL#1 to EL#4 intersect with one another.

When the distance DS between the condensed plane FP of the condensing optical system 3111 and the surface WS of the workpiece W is changed in the Z axis direction in this manner, an irradiation state of the processing lights EL#1 to EL#4 on the surface WS of the workpiece W changes. As a result, a distribution (for example, an intensity distribution) of the processing lights EL#1 to EL#4 on the surface WS of the workpiece W changes. Thus, the head driving system 32 may serve as an apparatus that is configured to change the distribution (for example, the intensity distribution) of the processing lights EL#1 to EL#4 on the surface WS of the workpiece W.

Again in FIG. 1 and FIG. 2, The stage apparatus 4 includes the stage 41 and a stage driving system 42. However, the stage apparatus 4 may not include the stage driving system 42. Note that the stage 41 may be referred to as a table.

The stage 41 is configured to support the workpiece W. Note that a state where "the stage 41 supports the workpiece W" here may mean a state where the workpiece W is directly or indirectly supported by the stage 41. The stage 41 may be configured to hold the workpiece W placed on the stage 41. Namely, the stage 41 may support the workpiece W by holding the workpiece W. In this case, the stage 41 may include a mechanical chuck, a vacuum chuck and the like in order to hold the workpiece W. Alternatively, the stage 41 may not be configured to hold the workpiece W. In this case, the workpiece W may be placed on the stage 41 without clamp. Furthermore, the stage 41 may be configured to release the held workpiece W, when the workpiece W is held. The above described irradiation optical system 311 irradiates the workpiece W with the processing lights EL#1 to EL#4 in at least a part of a period during which the stage 41 supports the workpiece W. Furthermore, the above described material nozzle 312 supplies the build materials M in at least a part of the period during which the stage 41 supports the workpiece W.

The stage driving system 42 is configured to move the stage 41. Thus, the stage driving system 42 may be referred to as a movement apparatus. The stage driving system 42 moves the stage 41 along at least one of the X axis, the Y axis, the Z axis, the θX direction, the θY direction and the θZ direction for example. When the stage driving system 42 moves the stage 41, a relative position between the processing head 31 and each of the stage 41 and the workpiece W placed on the stage 41 changes. Thus, the stage driving system 42 may serve as a movement apparatus that is configured to move the target irradiation area EA and the target supply area MA (furthermore, the melt pool MP) relative to the workpiece W, as with the head driving system 32. Moreover, when the stage driving system 42 moves the stage 41 along the Z axis direction (namely, a direction along the optical axis AX of the condensing optical system 3111), the distance DS between the condensed plane FP of the condensing optical system 3111 on which the processing lights EL#1 to EL#4 are condensed and the surface WS of the workpiece W changes. Thus, the stage driving system 42 may serve as a movement apparatus that is configured to change the distance DS between the condensed plane FP of the condensing optical system 3111 and the surface WS of the workpiece W in the Z axis direction, as with the head driving system 32. The stage driving system 42 may serve as an apparatus that is configured to change the distribution (for example, the intensity distribution) of the processing lights EL#1 to EL#4 on the surface WS of the workpiece W, as with the head driving system 32.

The gas supply source 5 is a supply source of the purge gas for purging the chamber space 73IN. The purge gas includes inert gas. The Nitrogen gas or Argon gas is one example of the inert gas. The gas supply source 5 is connected to the chamber space 73IN through a supply port 72 formed at a wall member 71 of the housing 7 and a supply pipe 51 that connects the gas supply source 5 and the supply port 72. The gas supply source 5 supplies the purge gas to the chamber space 73IN through the supply pipe 51 and the supply port 72. As a result, the chamber space 73IN is a space that is purged by the purge gas. Note that the gas supply source 5 may be a tank that stores the inert gas such as the Nitrogen gas or the Argon gas. When the purge gas is the Nitrogen gas, the gas supply source 5 may be a Nitrogen gas generation apparatus that generates the Nitrogen gas by using air as material.

When the material nozzle 312 supplies the build materials M together with the purge gas, the gas supply source 5 may supply the purge gas to the mix apparatus 12 to which the build materials M are supplied from the material supply source 1. Specifically, the gas supply source 5 may be connected to the mix apparatus 12 through a supply pipe 52 that connects the gas supply source 5 and the mix apparatus 12. As a result, the gas supply source 5 supplies the purge gas to the mix apparatus 12 through the supply pipe 52. In this case, the build materials M from the material supply source 1 may be supplied (specifically, pressure-fed) to the material nozzle 312 through the supply pipe 11 by the purge gas supplied from the gas supply source 5 through the supply pipe 52. Namely, the gas supply source 5 may be connected to the material nozzle 312 through the supply pipe 52, the mix apparatus 12 and the supply pipe 11. In this case, the material nozzle 312 supplies, from the supply outlet 314, the build materials M together with the purge gas for pressure-feeding the build materials M.

The control apparatus 6 is configured to control an operation of the processing system SYSa. The control apparatus 6 may include an arithmetic apparatus and a storage apparatus. The arithmetic apparatus may include at least one of a CPU (Central Processing Unit), a GPU (Graphic Processing Unit) and a FPGA (Field Programable Gate Array), for example. The storage apparatus may include a memory. The control apparatus 6 serves as an apparatus for controlling the operation of the processing system SYSa by means of the arithmetic apparatus executing a computer program. The computer program is a computer program that allows the arithmetic apparatus to execute (namely, to perform) a below described operation that should be executed by the control apparatus 6. Namely, the computer program is a computer program that allows the control apparatus 6 to function so as to make the processing system SYSa execute the below described operation. The computer program executed by the arithmetic apparatus may be recorded in the storage apparatus (namely, a recording medium) of the control apparatus 6, or may be recorded in any recording medium (for example, a hard disk or a semiconductor memory) that is built in the control apparatus 6 or that is attachable to the control apparatus 6. Alternatively, the arithmetic apparatus may download the computer program that should be executed from an apparatus disposed at the outside of the control apparatus 6 through a network interface.

For example, the control apparatus 6 may control an emitting aspect of the processing lights EL#1 to EL#4 by the irradiation optical system 311. The emitting aspect may include at least one of the intensities of the processing lights EL#1 to EL#4 and emitting timings of the processing lights EL#1 to EL#4, for example. When the processing lights EL#1 to EL#4 include the pulsed light, the emitting aspect may include at least one of an ON time of the pulse light, an emission cycle of the pulse light and a ratio (what we call a duty ratio) of a length of the ON time of the pulse light and a length of the emission cycle of the pulse light, for example. Moreover, the control apparatus 6 may control a moving aspect of the processing head 31 by the head driving system 32. Moreover, the control apparatus 6 may control a moving aspect of the stage 41 by the stage driving system 42. The moving aspect may include at least one of a moving distance, a moving speed, a moving direction and a moving timing, for example. Moreover, the control apparatus 6 may control a supply aspect of the build materials M by the material nozzle 312. The supply aspect may include at least one of the supplied amount (especially, the supplied amount per unit time) and a supply timing.

The control apparatus 6 may not be disposed in the processing system SYSa. For example, the control apparatus 6 may be disposed at the outside of the processing system SYSa as a server or the like. In this case, the control apparatus 6 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 6 and the processing system SYSa may be configured to transmit and receive various information through the network. Moreover, the control apparatus 6 may be configured to transmit an information such as a command and a control parameter to the processing system SYSa through the network. The processing system SYSa may include a reception apparatus that is configured to receive the information such as the command and the control parameter from the control apparatus 6 through the network. The processing system SYSa may include a transmission apparatus that is configured to transmit the information such as the command and the control parameter to the control apparatus 6 through the network (namely, an output apparatus that is configured to output an information to the control apparatus 6). Alternatively, a first control apparatus that is configured to perform a part of the arithmetic processing performed by the control apparatus 6 may be disposed in the processing system SYSa and a second control apparatus that is configured to perform another part of the arithmetic processing performed by the control apparatus 6 may be disposed at an outside of the processing system SYSa

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 6 may include. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 6 by means of the control apparatus 6 (namely, a computer) executing the computer program, may be realized by a hardware such as a predetermined gate array (a FPGA, an ASIC) of the control apparatus 6, or may be realized in a form in which the logical process block and a partial hardware module that realizes an partial element of the hardware are combined.

The housing 7 is a housing apparatus that is configured to house at least a part of each of at least the processing apparatus 3 and the stage apparatus 4 in the chamber space 73IN that is an internal space of the housing 7. The housing 7 includes the wall member 71 that forms the chamber space 73IN. The wall member 71 is a member that separates the chamber space 73IN from the external space 74OUT at the outside of the housing 7. The wall member 71 faces the chamber space 73IN through its inner wall 711 and faces the external space 74OUT through its outer wall 712. In this case, a space surrounded by the wall member 71 (more specifically, a space surrounded by the inner wall 711 of the wall member 71) is the chamber space 73IN. Note that an openable and closable door may be disposed at the wall member 71. The door may be opened when the workpiece W is to be placed on the stage 41. The door may be opened when the workpiece W and / or a build object is unloaded from the stage 41. The door may be closed during the processing (namely, during the additive processing or during a bonding processing). Note that an observation window (not illustrated) for visually observing the chamber space 73IN from the external space 74OUT of the housing 7 may be disposed at the wall member 71.

### (1-2) Operation of Processing system SYSa

Next, an operation of the processing system SYSa will be described. In the first example embodiment, the processing system SYSa performs an additive processing operation for forming the three-dimensional structural object ST on the workpiece W. Furthermore, the processing system SYSa performs a light characteristic control operation for controlling a characteristic of at least one of the processing light EL#1 to the processing light EL#4 in at least a part of a period during which the additive processing operation is performed. Thus, in the below described description, the additive processing operation and the light characteristic control operation will be described in order.

### (2-1) Additive Processing Operation

Firstly, the additive processing operation will be described. As described above, the processing system SYSa forms the three-dimensional structural object ST by the Laser Metal Deposition. Thus, the processing system SYSa may form the three-dimensional structural object ST by performing an existing additive processing operation (a build operation in this case) based on the Laser Metal Deposition. Next, one example of the additive processing operation of forming the three-dimensional structural object ST by using the Laser Metal Deposition will be briefly described.

The processing system SYSa forms the three-dimensional structural object ST on the workpiece W based on a three-dimensional model data or the like (for example, a CAD (Computer Aided Design) data) of the three-dimensional structural object ST that should be formed. A measured data of the solid object measured by at least one of a non-illustrated measurement apparatus disposed in the processing system SYSa and a three-dimensional shape measurement device disposed separately from the processing system SYSa may be used as the three-dimensional model data. The processing system SYSa sequentially forms a plurality of layered partial structural objects (it is referred to as the "structural layer" in the below described description) SL that are arranged along the Z axis direction in order to form the three-dimensional structural object ST, for example. For example, the processing system SYSa forms, one by one, the plurality of structural layers SL that are obtained by slicing the three-dimensional structural object ST along the Z axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in sequence will be described.

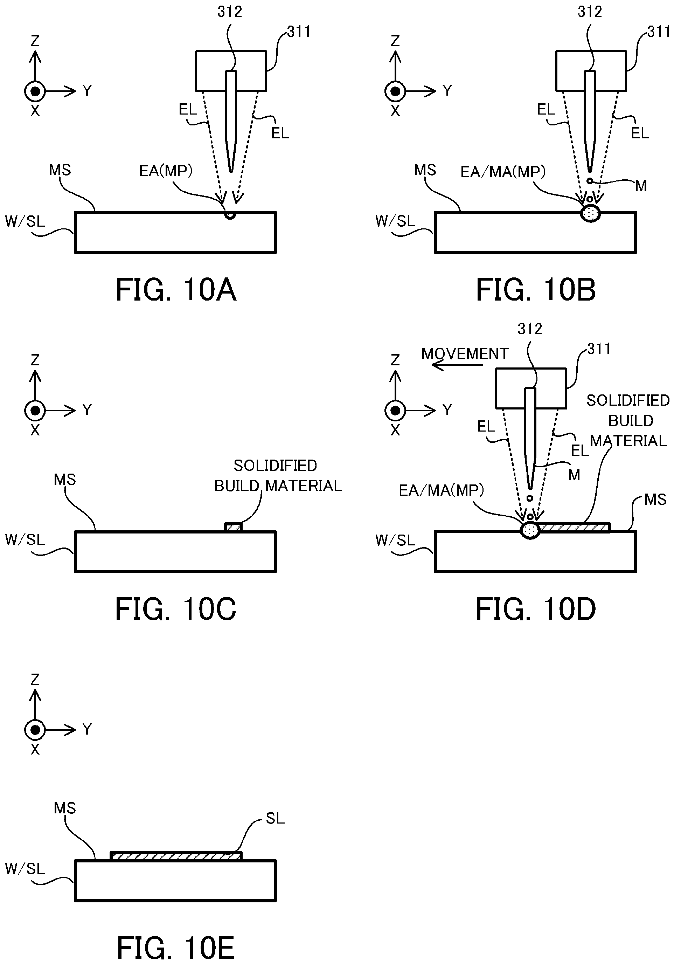

Firstly, with reference to FIG. 10A to FIG. 10E, an operation for forming each structural layer SL will be described. The processing system SYSa moves at least one of the processing head 31 and the stage so that the target irradiation areas EA are set at a desired area on the build surface MS that corresponds to a surface WS of the workpiece W or a surface of the formed structural layer SL, under the control of the control apparatus 6. Then, the processing system SYSa emits the processing lights EL#1 to EL#4 from the irradiation optical system 311 to the target irradiation areas EA. In this case, the condensed plane FP on which the processing lights EL#1 to EL#4 are condensed may be located on the build surface MS in the Z axis direction (see FIG. 8A to FIG. 8B). Alternatively, the condensed plane FP on which the processing lights EL#1 to EL#4 are condensed may be away from the build surface MS in the Z axis direction (see FIG. 9A to FIG. 9B) When the build surface MS is irradiated with the processing lights EL#1 to EL#4, as illustrated in FIG. 10A, the melt pool (namely, a pool of a metal molten by the processing lights EL#1 to EL#4) MP is formed on the build surface MS that is irradiated with the processing lights EL#1 to EL#4. Moreover, the processing system SYSa supplies the build materials M from the material nozzle 312 under the control of the control apparatus 6. Here, since the target irradiation area EA is coincident with the target supply area MA as described above, the target supply area MA includes at least a part of an area at which the melt pool MP is formed. Thus, the processing system SYSa supplies the build materials M to the melt pool MP from the material nozzle 312, as illustrated in FIG. 10B. As a result, the build materials M supplied to the melt pool MP are molten. Then, when the melt pool MP is not irradiated with the processing light EL due to the movement of the processing head 31, the build materials M molten in the melt pool MP are cooled and solidified (namely, coagulated). As a result, as illustrated in FIG. 10C, the solidified build materials M are deposited on the build surface MS. Namely, a build object is formed by a deposition of the solidified build materials M.

The processing system SYSa repeats a series of build process including the formation of the melt pool MP by the irradiation with the processing lights EL#1 to EL#4, the supply of the build materials M to the melt pool MP, the melting of the supplied build materials M and the solidification of the molten build materials M while relatively moving the processing head 31 relative to the build surface MS along the XY plane, as illustrated in FIG. 10D. In this case, the processing system SYSa irradiates an area on the build surface MS on which the build object should be formed with the processing lights EL#1 to EL#4 and does not irradiate an area on the build surface MS on which the build object should not be formed with the processing lights EL#1 to EL#4. Namely, the processing system SYSa moves the target irradiation areas EA along a predetermined moving trajectory on the build surface MS and irradiates the build surface MS with the processing lights EL#1 to EL#4 at a timing based on an aspect of a distribution of the area on which the build object should be formed. As a result, the melt pool MP also moves on the build surface MS along a moving trajectory based on the moving trajectory of the target irradiation areas EA. Specifically, the melt pool MP is formed in series at a part that is irradiated with the processing lights EL#1 to EL#4 in the area along the moving trajectory of the target irradiation areas EA on the build surface MS. As a result, as illustrated in FIG. 10E, the structural layer SL that is an aggregation of the build object of the build materials M, which are solidified after being molten, is formed on the build surface MS. Namely, the structural layer SL that is an aggregation of the build object formed in a pattern based on the moving trajectory of the melt pool MP on the build surface MS (namely, the structural layer SL having a shape based on the moving trajectory of the melt pool MP in a planar view) is formed. Incidentally, when the target irradiation areas EA are set at the area on which the build object should not be formed, the processing system SYSa may irradiate the target irradiation areas EA with the processing lights EL#1 to EL#4 and stop the supply of the build materials M. Moreover, when the target irradiation areas EA are set at the area on which the build object should not be formed, the processing system SYSa may supply the build materials M to the target irradiation areas EA and irradiate the target irradiation areas EA with the processing lights EL#1 to EL#4 having an intensity by which the melt pool MP is not formed.

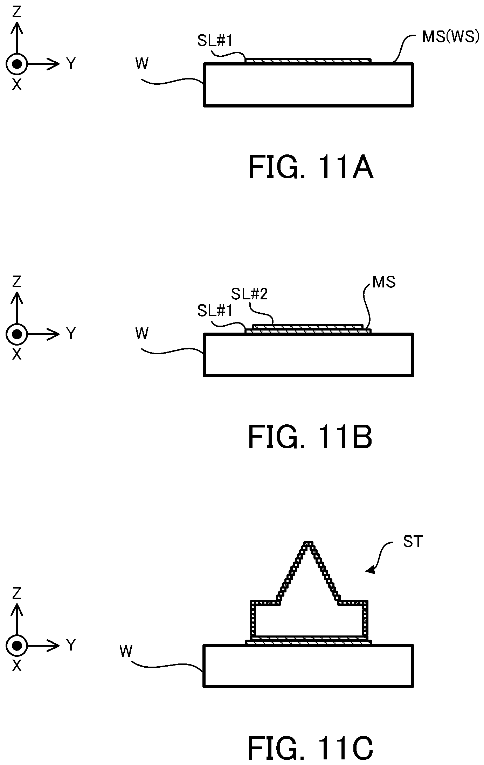

The processing system SYSa repeats the operation for forming the structural layer SL based on the three-dimensional model data under the control of the control apparatus 6. Specifically, the control apparatus 6 firstly generates slice data by performing a slicing process on the three-dimensional model data by a layer pitch. Note that data obtained by modifying a part of the slice data based on a characteristic of the processing system SYSa may be used. The processing system SYSa performs a process for forming the first structural layer SL#1 on the build surface MS that corresponds to the surface WS of the workpiece W based on the three-dimensional model data corresponding to the structural layer SL#1 (namely, the slice data corresponding to the structural layer SL#1). As a result, as illustrated in FIG. 11A, the structural layer SL#1 is formed on the build surface MS. Then, the processing system SYSa sets the surface (namely, an upper surface) of the structural layer SL#1 to be a new build surface MS and forms a second structural layer SL#2 on the new build surface MS. In order to form the structural layer SL#2, firstly, the control apparatus 6 controls the head driving system 32 so that the processing head 31 moves along the Z axis direction. Specifically, the control apparatus 6 controls the head driving system 32 to move the processing head 31 toward the +Z axis side so that the target irradiation area EA and the target supply area MA are set on the surface of the structural layer SL#1 (namely, the new build surface MS). Then, the processing system SYSa performs a process for forming the structural layer SL#2 on the structural layer SL#1 based on the slice data corresponding to the structural layer SL#2, as with the process for forming the structural layer SL#1 under the control of the control apparatus 6. As a result, as illustrated in FIG. 11B, the structural layer SL#2 is formed. Then, the same process is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 11C.

### (1-2-2) Light Characteristic Control Operation

Next, the light characteristic control operation will be described. The light characteristic control operation is mainly performed under the control of the control apparatus 6. Namely, the control apparatus 6 may control (in other words, change or adjust) the characteristic of at least one of the processing lights EL#1 to EL#4 by performing the light characteristic control operation in at least a part of the period during which the additive processing operation is performed.

The control apparatus 6 may control the characteristic of at least one of the processing lights EL#1 to EL#4 individually. Namely, the control apparatus 6 may control the characteristic of one processing light EL of the processing lights EL#1 to EL#4 regardless of whether or not the characteristic of another processing light EL of the processing lights EL#1 to EL#4 is controlled. In this case, the control apparatus 6 may control the characteristic of each of the processing lights EL#1 to EL#4. Namely, the control apparatus may control the characteristic of the processing light EL#1, may control the characteristic of the processing light EL#2, may control the characteristic of the processing light EL#3, and may control the characteristic of the processing light EL#4. On the other hand, the control apparatus 6 may control the characteristic of at least one of the processing lights EL#1 to EL#4 and may not control the characteristic of at least another one of the processing lights EL#1 to EL#4. Namely, the control apparatus 6 may control the characteristic of at least one of the processing lights EL#1 to EL#4 and may fix the characteristic of at least another one of the processing lights EL#1 to EL#4. For example, the control apparatus 6 may control the characteristic of each of the processing lights EL#1 and EL#2 and may not control (may fix) the characteristic of each of the processing lights EL#3 and EL#4.

The control apparatus 6 may control the characteristic of at least one of the processing lights EL#1 to EL#4 so that the characteristic of at least one of the processing lights EL#1 to EL#4 is different from the characteristic of at least another one of the processing lights EL#1 to EL#4. In other words, the control apparatus 6 may be configured to set (in other words, determine) the characteristic of at least one of the processing lights EL#1 to EL#4 so that the characteristic of at least one of the processing lights EL#1 to EL#4 is different from the characteristic of at least another one of the processing lights EL#1 to EL#4. In this case, the control apparatus 6 may control the characteristic of at least one of the processing lights EL#1 to EL#4 so that the characteristic of at least one of the processing lights EL#1 to EL#4 is the set characteristic. For example, the control apparatus 6 may set the characteristic of the processing light EL#1 so that the characteristic of the processing light EL#1 is different from the characteristic of each of the processing lights EL#2 to EL#4, and may control the characteristic of the processing light EL#1 so that the characteristic of the processing light EL#1 is the set characteristic.

The characteristic of the processing light EL may include the intensity of the processing light EL. In this case, the control apparatus 6 may control the intensity of at least one of the processing lights EL#1 to EL#4. Note that "the intensity of the processing light EL" here may mean an intensity of the processing light EL in a plane that intersects with the propagating direction of the processing light EL. Typically, "the intensity of the processing light EL" here may mean an intensity of the processing light EL on the build surface MS (for example, the surface WS of the workpiece W or the surface of the structural layer SL) on which the additive processing is actually performed.

The characteristic of the processing light EL may include the intensity distribution of the processing light EL. In this case, the control apparatus 6 may control the intensity distribution of at least one of the processing lights EL#1 to EL#4. Note that "the intensity distribution of the processing light EL" here may mean an intensity of the processing light EL in a plane that intersects with the propagating direction of the processing light EL. Typically, "the intensity distribution of the processing light EL" here may mean an intensity distribution of the processing light EL on the build surface MS (for example, the surface WS of the workpiece W or the surface of the structural layer SL) on which the additive processing is actually performed.

The characteristic of the processing light EL may include a polarization distribution of the processing light EL. Namely, the characteristic of the processing light EL may include a distribution of a polarized light component (for example, a distribution of the polarized light component in a plane (typically, the build surface MS) that intersects with the propagating direction of the processing light EL) included in the processing light EL. The characteristic of the processing light EL may include a wavelength distribution of the processing light EL. Namely, the characteristic of the processing light EL may include a distribution of a light component (for example, a distribution of the light component in a plane (typically, the build surface MS) that intersects with the propagating direction of the processing light EL) in each wavelength or in each wavelength range included in the processing light EL.

When the characteristic (for example, at least one of the intensity and the intensity distribution) of the processing light EL is changed, a state (a formed state) of the melt pool MP formed by the processing light EL is changed. Thus, the control apparatus 6 may control the formed state of the melt pool MP by controlling the characteristic (for example, at least one of the intensity and the intensity distribution) of the processing light EL. The control apparatus 6 may control the formed state of the melt pool MP so that the formed state of the melt pool MP is a desired formed state (namely, an ideal formed state) by controlling the characteristic (for example, at least one of the intensity and the intensity distribution) of the processing light EL.

When the formed state of the melt pool MP is controlled, the control apparatus 6 may control the formed state of the melt pool MP based on a measured result by a measurement apparatus that is configured to measure the formed state of the melt pool MP. A measurement apparatus 82b of a processing system SYSb in a second example embodiment described below is one example of this type of measurement apparatus. However, the control apparatus 6 may control the formed state of the melt pool MP based on the measured result of the formed state of the melt pool MP by the measurement apparatus that is different from the measurement apparatus 82b.

The formed state of the melt pool MP may include a temperature distribution of the melt pool MP. In this case, the control apparatus 6 may control the characteristic (for example, at least one of the intensity and the intensity distribution) of the processing light EL so that the temperature distribution of the melt pool MP is a desired temperature distribution (namely, an ideal temperature distribution).

When the temperature distribution of the melt pool MP is changed, there is a possibility that a size of the melt pool MP is changed. For example, when the temperature distribution of the melt pool MP is changed, there is a possibility that a size (namely, a width, a length) of the melt pool MP in a direction along the build surface MS is changed. For example, when the temperature distribution of the melt pool MP is changed, there is a possibility that a size (namely, a depth) of the melt pool MP in a direction intersecting with the build surface MS is changed. Thus, the formed state of the melt pool MP may include the size of the melt pool MP. In this case, the control apparatus 6 may control the characteristic (for example, at least one of the intensity and the intensity distribution) of the processing light EL so that the size of the melt pool MP is a desired size (namely, an ideal size).

In order to control the characteristic of at least one of the processing lights EL#1 to EL#4, the control apparatus 6 may control at least one of the processing light sources 2#1 to 2#4 that generate the processing lights EL#1 to EL#4, respectively. Specifically, the control apparatus 6 may control the characteristic of the processing light EL#1 by controlling the processing light source 2#1. The control apparatus 6 may control the characteristic of the processing light EL#2 by controlling the processing light source 2#2. The control apparatus 6 may control the characteristic of the processing light EL#3 by controlling the processing light source 2#3. The control apparatus 6 may control the characteristic of the processing light EL#4 by controlling the processing light source 2#4.

In order to control the characteristic of at least one of the processing lights EL#1 to EL#4, the control apparatus 6 may control the distance DS in the Z axis direction between the condensed plane FP on which the condensing optical system 3111 condenses the processing lights EL#1 to EL#4 and the surface WS of the workpiece W. This is because the distribution (for example, the intensity distribution) of the processing lights EL#1 to EL#4 on the surface WS of the workpiece W (alternatively, the build surface MS) is changed when the distance DS is changed, as described above. Thus, the control apparatus 6 may control at least one of the head driving system 32 and the stage driving system 42 that are configured to change the distance DS so that the characteristic of at least one of the processing lights EL#1 to EL#4 is the desired characteristic by controlling the distance DS.

In order to control the characteristic of at least one of the processing lights EL#1 to EL#4, the control apparatus 6 may control an optical member that is included in the irradiation optical system 311 and that is configured to control the characteristic of at least one of the processing lights EL#1 to EL#4.

The control apparatus 6 may control the characteristic of at least one of the processing lights EL#1 to EL#4 based on a movement information related to the movement of the target irradiation areas EA on the build surface MS. Here, the target irradiation area EA moves due to the movement of the processing head 31 by the head driving system 32 and the movement of the stage 41 by the stage driving system 42 as described above. Thus, an operation for controlling the characteristic of at least one of the processing lights EL#1 to EL#4 based on the movement information related to the movement of the target irradiation areas EA may be regarded to be equivalent to an operation for controlling the characteristic of at least one of the processing lights EL#1 to EL#4 based on an information related to the movement of at least one of the processing head 31 and the stage 41.

The movement information related to the movement of the target irradiation areas EA may include an information related to a moving direction of the target irradiation areas EA (namely, a moving direction of the irradiation positions of the processing lights EL#1 to EL#4) on the build surface MS. In this case, the control apparatus 6 may control the characteristic of at least one of the processing lights EL#1 to EL#4 based on the moving direction of the target irradiation areas EA on the build surface MS. The control apparatus 6 may control the characteristic of at least one of the processing lights EL#1 to EL#4 based on a moving direction of at least one of the processing head 31 and the stage 41.

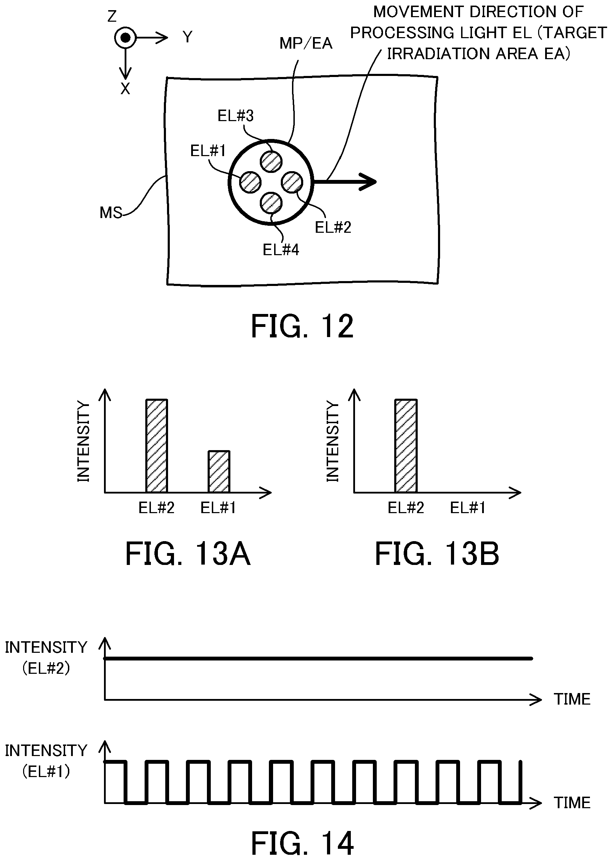

When the characteristic of at least one of the processing lights EL#1 to EL#4 is controlled based on the moving direction of the target irradiation areas EA on the build surface MS, the control apparatus 6 may control the characteristic of at least one of the processing lights EL#1 to EL#4 so that the characteristic of at least one processing light EL with which a position at a relatively front side along the moving direction is irradiated is different from the characteristic of at least one processing light EL with which a position at a relatively rear side along the moving direction is irradiated. For example, FIG. 12 is a planar view that illustrates the target irradiation areas EA (namely, irradiation positions of the processing lights EL#1 to EL#4) moving toward the +Y side along the Y axis direction on the build surface MS. In an example illustrated in FIG. 12, the irradiation position of the processing light EL#2 is located at the relatively front side (namely, the +Y side) along the moving direction of the target irradiation areas EA and the irradiation position of the processing light EL#1 is located at the relatively rear side (namely, the -Y side) along the moving direction of the target irradiation areas EA. In this case, the control apparatus 6 may control the characteristic of at least one of the processing lights EL#1 and EL#2 so that the characteristic of the processing light EL#1 is different from the characteristic of the processing light EL#2.

As one example, as illustrated in FIG. 13A and FIG. 13B each of which is a graph illustrating the intensities of the processing light EL#1 with which the position at the relatively rear side along the moving direction is irradiated and the processing light EL#2 with which the position at the relatively front side along the moving direction is irradiated, the control apparatus 6 may control the characteristic (for example, the intensity or the intensity distribution) of at least one of the processing lights EL#1 and EL#2 so that the intensity of the processing light EL#1 is lower than the intensity of the processing light EL#2. Note that FIG. 13A illustrates an example in which the intensity of the processing light EL#1 is higher than zero and FIG. 13B illustrates an example in which the intensity of the processing light EL#1 is zero. When the intensity of the processing light EL#1 with which the position at the relatively rear side along the moving direction is irradiated is lower than the intensity of the processing light EL#2 with which the position at the relatively front side along the moving direction is irradiated in this manner, the formed state of the melt pool MP is kept to be the desired formed condition more easily. For example, the formed state of the melt pool MP is kept in a liquid phase state that is one example of the desired formed condition more easily. Therefore, the processing system SYSa is capable of properly processing the workpiece W.

As another example, as illustrated in FIG. 14 that is a graph illustrating the intensities of the processing light EL#1 with which the position at the relatively rear side along the moving direction is irradiated and the processing light EL#2 with which the position at the relatively front side along the moving direction is irradiated, the control apparatus 6 may control the characteristic (for example, the intensity or the intensity distribution) of the processing light EL#1 so that the processing light EL#1 is the pulsed light. On the other hand, the control apparatus 6 may control the characteristic (for example, the intensity or the intensity distribution) of the processing light EL#2 so that the processing light EL#2 is the continuous light (CW: Continuous Wave). When the processing light EL#1 with which the position at the relatively rear side along the moving direction is irradiated is the pulsed light and the processing light EL#2 with which the position at the relatively front side along the moving direction is irradiated is the continuous light, a processed mark of the build surface MS by the processing light EL#2 is smoothed by the processing light EL#2 that is the pulsed light. Therefore, the processing system SYSa is capable of properly processing the workpiece W. For example, the processing system SYSa is capable of forming the three-dimensional structural object ST the surface of which is relatively smooth. Moreover, the control apparatus 6 may control at least one of the processing light EL#1 and the processing light EL#2 so that an integrated value of a light intensity of the processing light EL#1 is different from an integrated value of a light intensity of the processing light EL#2.

The control apparatus 6 may control the characteristic of at least one of the processing lights EL#1 to EL#4 based on a workpiece information related to the workpiece W that is a processing target, in addition to or instead of the above described movement information. The workpiece information related to the workpiece W may include an information related to a shape of the workpiece W. In this case, the control apparatus 6 may control the characteristic of at least one of the processing lights EL#1 to EL#4 based on the shape of the workpiece W. Incidentally, when a part of the three-dimensional structural object ST has been already formed on the workpiece W, the information related to the shape of the workpiece W may include an information related to the shape of the workpiece W including a part of the three-dimensional structural object ST already formed.

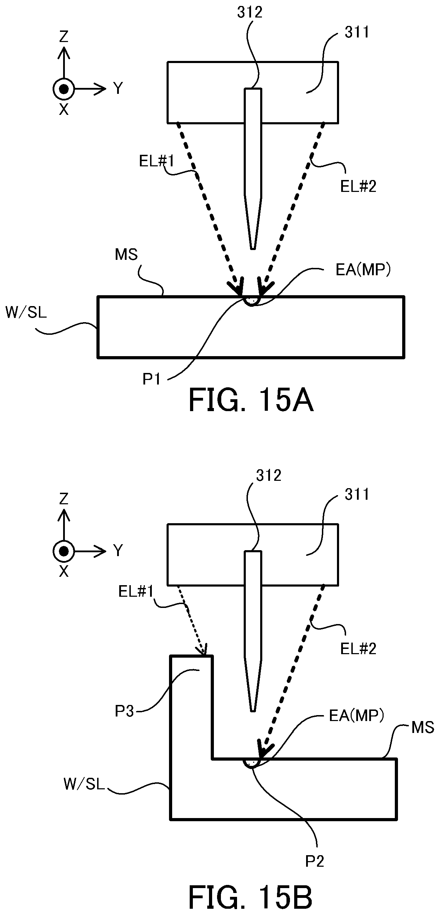

The control apparatus 6 may control the characteristic (for example, the intensity or the intensity distribution) of at least one of the processing lights EL#1 to EL#4 based on the shape of the workpiece W so that the intensity of the processing light EL with which a part of the workpiece W that should be processed is irradiated is equal to or higher than a processable intensity that is so high that the workpiece W is processed. The control apparatus 6 may control the characteristic (for example, the intensity or the intensity distribution) of at least one of the processing lights EL#1 to EL#4 based on the shape of the workpiece W so that the intensity of the processing light EL with which a part of the workpiece W that should not be processed is irradiated is equal to or lower than a un-processable intensity that is so low that the workpiece W is not processed. For example, FIG. 15A is a cross-sectional view that illustrates an aspect in which the processing lights EL#1 and EL#2 are emitted toward the target irradiation areas EA in a situation where the target irradiation areas EA are set on a first part P1 in order to process the first part P1 of the build surface MS. In the situation illustrated in FIG. 15A, the first part P1 of the workpiece W that should be processed is irradiated with each of the processing lights EL#1 and EL#2. Thus, in this case, the control apparatus 6 may control the characteristic (for example, the intensity or the intensity distribution) of each of the processing lights EL#1 and EL#2 so that the intensity of each of the processing lights EL#1 and EL#2 is equal to or higher than the processable intensity. On the other hand, FIG. 15B is a cross-sectional view that illustrates an aspect in which the processing lights EL#1 and EL#2 are emitted toward the target irradiation areas EA in a situation where the target irradiation areas EA are set on a second part P2 in order to process the second part P2 of the build surface MS. In the situation illustrated in FIG. 15B, the second part P2 of the workpiece W that should be processed is irradiated with the processing light EL#2. Thus, in this case, the control apparatus 6 may control the characteristic (for example, the intensity or the intensity distribution) of the processing light EL #2 so that the intensity of the processing light EL#2 is equal to or higher than the processable intensity. On the other hand, the second part P2 of the workpiece W that should be processed is not irradiated with the processing light EL#1. This is because a third part P3 of the workpiece W that should not be processed exists on the optical path of the processing light EL#1 from the irradiation optical system 211 to the target irradiation area EA. In this case, if the third part P3 is irradiated with the processing light EL#1, there is a possibility that the third part P3 is unintentionally processed. Thus, the control apparatus 6 may control the characteristic (for example, the intensity or the intensity distribution) of the processing light EL#1 so that the intensity of the processing light EL#1 is equal to or lower than the un-processable intensity. In this case, the control apparatus 6 may perform the control so that the intensity of the processing light EL #1 is zero. As a result, the processing system SYSa is capable of properly processing the workpiece W.

### (1-3) Technical Effect of Processing System SYSa

As described above, the processing system SYSa in the first example embodiment is capable of individually controlling at least one of the plurality of processing lights EL with which the workpiece W is irradiated. Thus, the processing system SYSa is capable of processing the workpiece W more properly by using the plurality of processing lights EL, compared to a processing system in a comparison example that is not capable of individually controlling at least one of the plurality of processing lights EL.

### (1-4) Modified Example of Processing Light EL

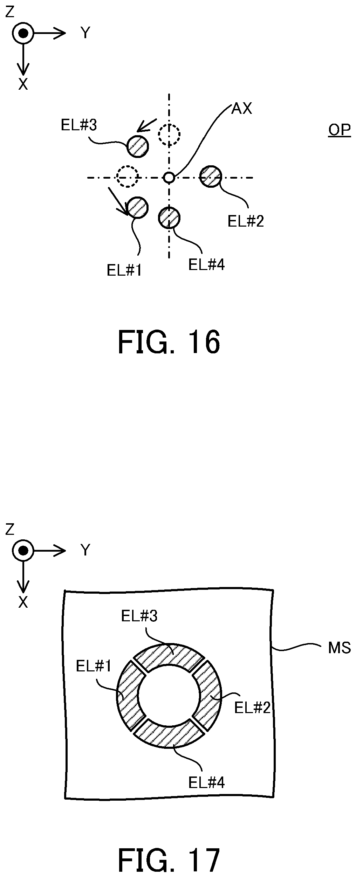

In the above described example illustrated in FIG. 5, the processing lights EL#1 to EL#4 pass through the areas that are rotationally symmetric about the optical axis AX and that are away from the optical axis AX toward the different directions in the virtual optical plane OP (for example, the incident pupil plane of the condensing optical system 3111) in the condensing optical system 3111 that intersects with the optical axis AX of the condensing optical system 3111. However, as illustrated in FIG. 16 that is a cross-sectional view illustrating the optical paths of the processing lights EL#1 to EL#4 in the optical plane OP, the processing lights EL#1 to EL#4 may pass through areas that are rotationally asymmetric about the optical axis AX and that are away from the optical axis AX toward the different directions in the optical plane OP. In other words, the areas through which the processing lights EL#1 to EL#4 pass in the optical plane OP may be 1-fold rotationally symmetric about the optical axis AX. For example, the processing lights EL#1 to EL#4 may pass through different areas that are not line-symmetric in a situation where a straight line intersecting with the optical axis AX (for example, a straight line along the X axis or the Y axis) is a symmetrical axis in the optical plane OP. In this case, there is a smaller possibility that a returned light of one processing light EL, with which the workpiece W is irradiated, from the workpiece W enter the processing light source 2 that generates another processing light EL through an optical path that is same as an optical path of another processing light EL with which the workpiece W is irradiated. Thus, there is a smaller possibility that the processing light source 2 gets out of order due to the returned light entering the processing light source 2.

Moreover, In the above described example illustrated in FIG. 8 and FIG. 9, a shape of the beam spot formed by the processing light EL on the build surface MS (for example, the surface WS of the workpiece W or the surface of the structural layer SL) is a circular shape. However, the shape of the beam spot formed by the processing light EL may be a shape that is different from the circular shape. For example, the shape of the beam spot formed by the processing light EL may be an oval shape, a rectangular shape or a slit-shape. Moreover, the plurality of processing lights EL may form the beam spot having a desired shape. For example, as illustrated in FIG. 17 that is a planar view illustrating one example of the beam spot having the desired shape formed by the plurality of processing lights EL on the build surface MS, the plurality of processing lights EL may form the beam spot having a ring shape on the build surface MS. In this case, each processing light EL may form a beam spot having an arc-shape (a partial ring shape) that is a part of the ring on the build surface MS.

### (2) Processing System SYS in Second Example Embodiment

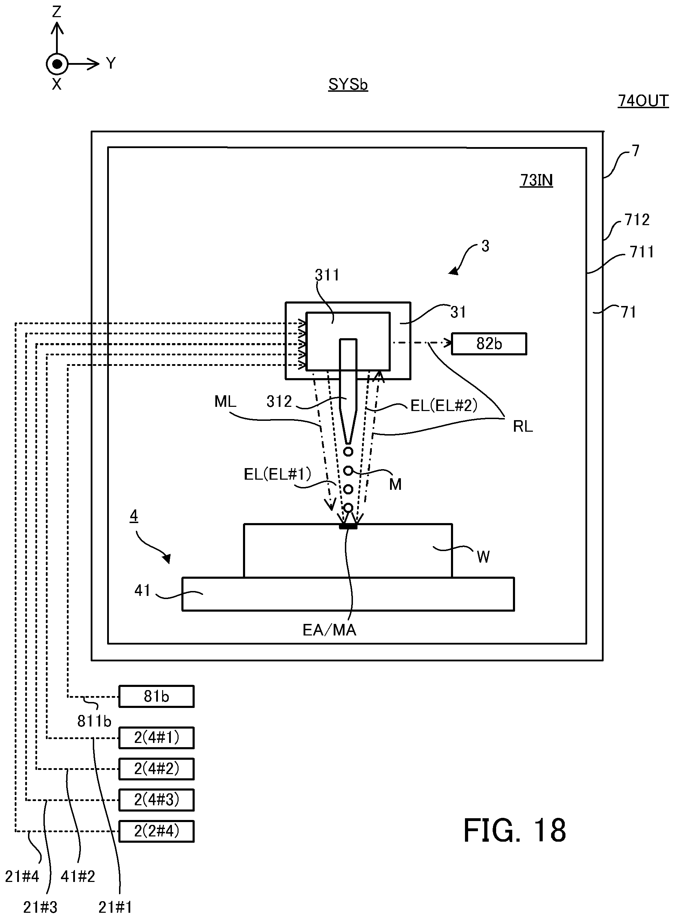

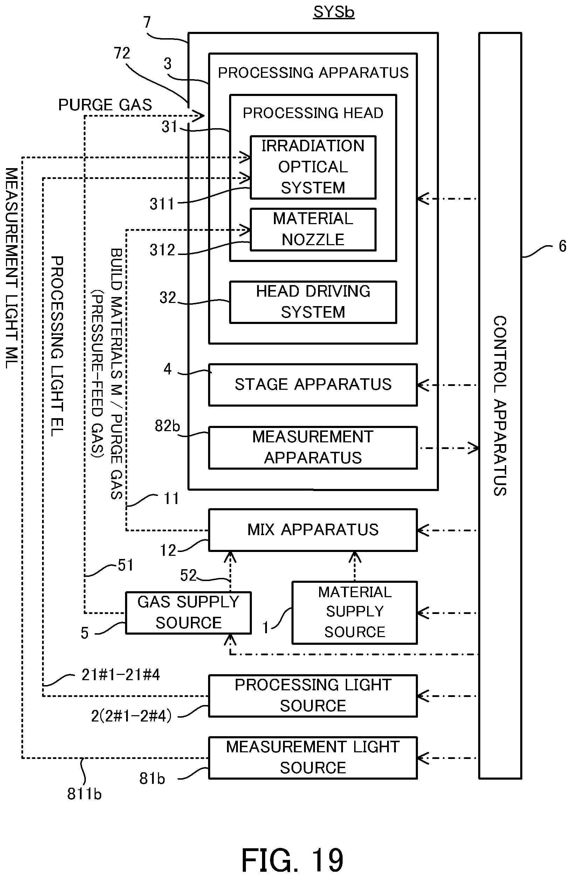

Next, with reference to FIG. 18 and FIG. 19, the processing system SYS in a second example embodiment (hereinafter, the processing system SYS in the second example embodiment is referred to as a "processing system SYSb") will be described. FIG. 18 is a cross-sectional view that conceptionally illustrates one example of the configuration of the processing system SYSb in the second example embodiment. FIG. 19 is a system configuration diagram that illustrates a system configuration of the processing system SYSb in the second example embodiment.

As illustrated in FIG. 18 and FIG. 19, the processing system SYSb in the second example embodiment is different from the above described processing system SYSa in the first example embodiment in that it includes a measurement light source 81b and a measurement apparatus 82b. Another feature of the processing system SYSb may be same as another feature of the processing system SYSa.

The measurement light sources 81b is configured to emit at least one of an infrared light, a visible light and a ultraviolet light as a measurement light MI,, for example. However, another type of emission (for example, at least one of a Terahertz wave, a microwave, a X-ray and so on) may be used as the measurement light ML. A wavelength of the measurement light ML may be different from a wavelength of the processing light EL. A wavelength range of the measurement light ML may be different from a wavelength range of the processing light EL. However, the wavelength of the measurement light ML may be same as the wavelength of the processing light EL. At least a part of the wavelength range of the measurement light ML may be superimposed with (namely, overlapped with) at least a part of the wavelength range of the processing light EL. The measurement light ML emitted from the measurement light source 81b enters the irradiation optical system 311 through a light transmission member 811b including at least one of an optical fiber, a light pipe and so on. Thus, the irradiation optical system 311 is optically connected to the measurement light source 81b through the light transmission member 811b. The workpiece W (more specifically, the build surface MS) is irradiated with the measurement light ML, which has entered the irradiation optical system 311, through the irradiation optical system 311 (namely, through the condensing optical system 3111). In this case, the measurement light ML may be used as an illumination light for illuminating the workpiece W. In this case, the measurement light source 81b may be referred to as an illumination apparatus.

The irradiation optical system 311 may irradiate an area, which is irradiated with at least one of the processing lights EL#1 to EL#4 on the workpiece W, with the measurement light ML. The irradiation optical system 311 may irradiate an area, which includes at least a part of the target irradiation area EA set on the workpiece W, with the measurement light ML. The irradiation optical system 311 may irradiate an area, which includes at least a part of the melt pool MP formed on the workpiece W, with the measurement light ML. However, the irradiation optical system 311 may irradiate an area, which is different from the area irradiated with at least one of the processing lights EL#1 to EL#4 on the workpiece W, with the measurement light ML. The irradiation optical system 311 may irradiate an area, which is different from the area including at least a part of the target irradiation area EA set on the workpiece W, with the measurement light ML. The irradiation optical system 311 may irradiate an area, which is different from the area including at least a part of the melt pool MP formed on the workpiece W, with the measurement light ML.

When the workpiece W is irradiated with the measurement light ML, a returned light generated by irradiating the workpiece W with the measurement light ML is emitted from the workpiece W. The returned light may include at least one of a reflected light, a scattered light and a transmitted light of the measurement light ML by the workpiece W. Note that the returned light may be referred to as a light that is directly generated by irradiating the workpiece W with the measurement light ML. Moreover, the melt pool MP formed by the molten metal molten is formed on the workpiece W as described above. In this case, from the workpiece W, a light from the melt pool MP (a light that is indirectly generated by the irradiation with the processing lights EL) is emitted from the workpiece W. Hereinafter, both of the returned light that is directly generated by irradiating the workpiece W with the measurement light ML and the light that is indirectly generated by the irradiation with the processing lights EL will be referred to as an object light RL. A wavelength of the object light RL (especially, a wavelength of the returned light included in the object light RL) may be different from the wavelength of the processing light EL. A wavelength range of the object light RL may be different from the wavelength range of the processing light EL. The wavelength of the object light RL may be same as the wavelength of the processing light EL. At least a part of the wavelength range of the object light RL may be overlapped with at least a part of the wavelength range of the processing light EL. The object light RL emitted from the workpiece W enters the measurement apparatus 82b through the irradiation optical system 311 (namely, through the condensing optical system 3111).

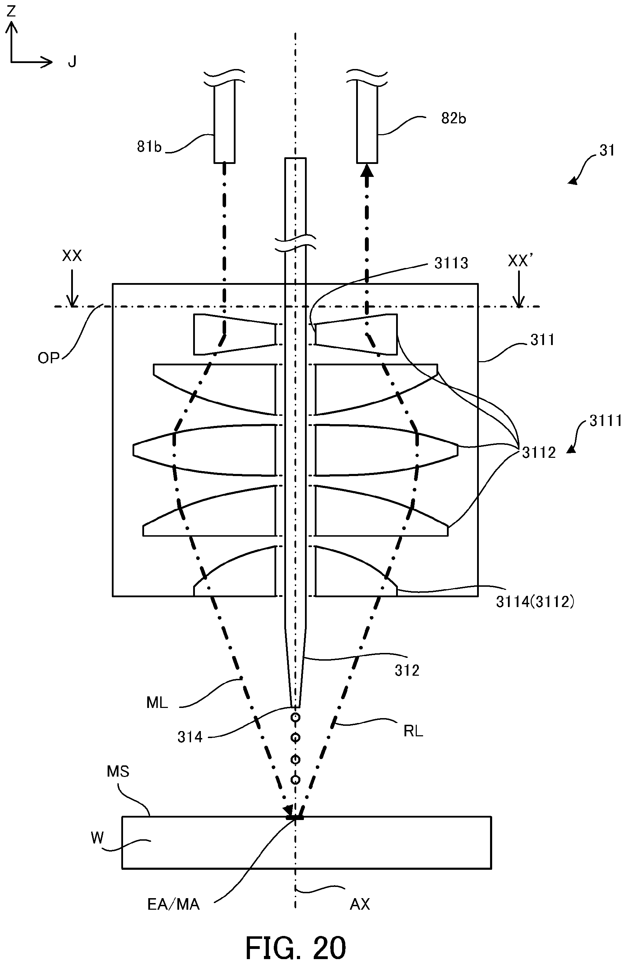

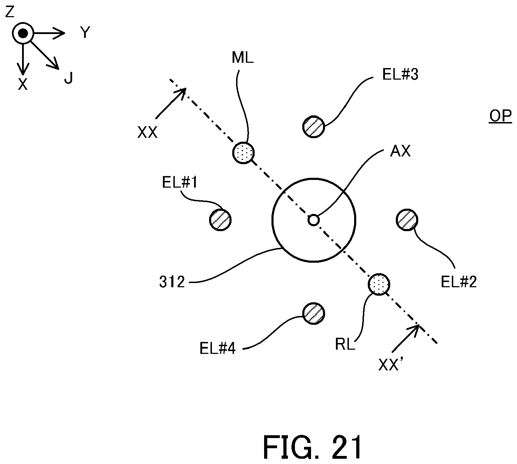

Here, with reference to FIG. 20 and FIG. 21, optical paths of the measurement light ML and the object light RL in the irradiation optical system 311 (especially, in the condensing optical system 3111) will be described. FIG. 20 is a cross-sectional view that illustrates the optical paths of the measurement light ML and the object light RL in the irradiation optical system 311 (especially, in the condensing optical system). FIG. 21 is a XX-XX' cross-sectional view of FIG. 20. Note that FIG. 20 is a XX-XX' cross-sectional view of FIG. 21.

As illustrated in FIG. 20 and FIG. 21, at least a part of the optical path of the measurement light ML, at least a part of the optical path of the object light RL and at least a part of the optical paths of the processing lights EL#1 to EL#4 may be optically separated from one another other in the condensing optical system 3111. Namely, at least a part of the optical path of the measurement light ML, at least a part of the optical path of the object light RL and at least a part of the optical paths of the processing lights EL#1 to EL#4 may be different from one another other in the condensing optical system 3111. At least a part of the optical path of the measurement light ML, at least a part of the optical path of the object light RL and at least a part of the optical paths of the processing lights EL#1 to EL#4 may not be overlapped with one another other in the condensing optical system 3111.

In order to optically separate at least a part of the optical path of the measurement light ML, at least a part of the optical path of the object light RL and at least a part of the optical paths of the processing lights EL#1 to EL#4, as illustrated in FIG. 21, the measurement light ML, the object light RL and the processing lights EL#1 to EL#4 may pass through different areas, respectively, that are away from the optical axis AX toward different directions in the virtual optical plane OP (typically, the plane along the XY plane, and the pupil plane (the incident pupil plane) of the condensing optical system 3111, for example) in the condensing optical system 3111 that intersects with the optical axis AX of the condensing optical system 3111. An area through which the measurement light ML passes, an area through which the object light RL passes and areas through which the processing lights EL#1 to EL#4 pass may not be overlapped from one another in the optical plane OP. In this case, a distance between the optical axis AX and the optical path of the measurement light ML, a distance between the optical axis AX and the optical path of the object light RL, the distance between the optical axis AX and the optical path of the processing light EL#1, the distance between the optical axis AX and the optical path of the processing light EL#2, the distance between the optical axis AX and the optical path of the processing light EL#3 and the distance between the optical axis AX and the optical path of the processing light EL#4 may be equal to one another in the optical plane OP. Alternatively, the distances between the optical axis AX and the optical paths of at least two of the measurement light ML, the object light RL and the processing lights EL#1 to EL#4 may be different from each other. In an example illustrated in FIG. 21, the distances between the optical axis AX and the optical paths of the measurement light ML, the object light RL and the processing lights EL#1 to EL#4 are equal to one another in the optical plane OP. In this case, the measurement light ML, the object light RL and the processing lights EL#1 to EL#4 may pass through areas that are line symmetric with respect to a J axis that intersects with the optical axis AX in the optical plane OP. For example, as illustrated in FIG. 21, the measurement light ML, the object light RL and the processing lights EL#1 to EL#4 may pass through six areas whose rotational angles along the clockwise direction around the origin are 315 degree, 135 degree, 270 degree, 90 degree, 0 degree and 180 degree (alternatively, θ+α degree (note that α is any angle that is different from 90 degree, 180 degree and 270 degree), θ+α-180 degree, θ+270 degree, θ+90 degree, θ degree and θ+180 degree) in the coordinate plane along the XY plane the origin of which is the optical axis AX. In other words, the measurement light ML, the object light RL and the processing lights EL#1 to EL#4 may pass through areas that are 2-fold rotationally symmetric about the optical axis AX in the optical plane OP.

When the measurement light ML, the object light RL and the processing lights EL#1 to EL#4 pass through the different areas, respectively, that are away from the optical axis AX toward the different directions in the optical plane OP, the condensing optical system 3111 may emit the measurement light ML and the processing lights EL#1 to EL#4 toward the workpiece W from different directions. Specifically, as illustrated in FIG. 21, the condensing optical system 3111 may emit the measurement light ML and the processing lights EL#1 to EL#4 toward the workpiece W from positions that are different from one another along a rotational direction around the optical axis AX. Moreover, the object light RL may pass through the optical path that is different from the optical paths through which the processing lights EL#1 to EL#4 pass between the condensing optical system 3111 and the workpiece W and then enter the condensing optical system 3111.

Alternatively, in order to optically separate at least a part of the optical path of the measurement light ML, at least a part of the optical path of the object light RL and at least a part of the optical paths of the processing lights EL#1 to EL#4, the measurement light ML, the object light RL and the processing lights EL#1 to EL#4 may pass through different areas, respectively, that are away from the optical axis AX toward same direction by different distances in the optical plane OP. In this case, the condensing optical system 3111 may irradiate the workpiece W with the measurement light ML and the processing lights EL#1 to EL#4 so that an angle between the optical axis AX and a propagating direction of the measurement light ML and the angles between the optical axis AX and the propagating directions of the processing lights EL#1 to EL#4 are different from one another between the condensing optical system 3111 and the workpiece W. Moreover, the object light RL propagate along an optical path that allows an angle between the optical axis AX and a propagating direction of the object light RL and the angles between the optical axis AX and the propagating directions of the processing lights EL#1 to EL#4 to be different from one another between the condensing optical system 3111 and the workpiece W, and then enter the condensing optical system 3111.

The object light RL entering the condensing optical system 3111 (namely, through at least a part of the irradiation optical system 311) is detected (in other words, optically received) by the measurement apparatus 82b. Thus, the measurement apparatus 82b may be referred to as a detection apparatus or a light reception apparatus. Moreover, the measurement apparatus 82b may be referred to as an information obtaining apparatus that is configured to obtain an information related to the object light RL. The measurement apparatus 82b is configured to measure (in other words, observe or monitor) the workpiece W by detecting the object light RL. As one example, the measurement apparatus 82b may include an imaging apparatus (a camera) that is configured to capture an image of the workpiece W by detecting the object light RL. In this case, the measurement apparatus 82b may measure the workpiece W by capturing the image of at least a part of the workpiece W that is irradiated with the measurement light ML that is usable as the illumination light.

A detected result of the object light RL (namely, a measured result of the workpiece W) by the measurement apparatus 82b is outputted to the control apparatus 6. The control apparatus 6 may control the processing system SYSb so as to process the workpiece W based on the detected result of the object light RL by the measurement apparatus 82b.

The above described processing system SYSb in the second example embodiment is capable of achieving an effect that is same as an effect achievable by the above described processing system SYSa in the first example embodiment. Furthermore, the processing system SYSb is capable of processing the workpiece W based on the measured result of the workpiece W by the measurement apparatus 82b. Thus, the processing system SYSb is capable of processing the workpiece W more properly, compared to a processing system in a comparison example that does not include the measurement apparatus 82b. For example, when the workpiece W is irradiated with the measurement light ML before the additive processing operation is started, the processing system SYSb may determine a state of the workpiece W that is not yet processed based on the measured result of the workpiece W by the measurement apparatus 82b. As a result, the processing system SYSb may properly set a processing condition based on the state of the workpiece W that is not yet processed so that the proper additive processing operation is performed. For example, when the workpiece W is irradiated with the measurement light ML during a period during which the additive processing operation is performed, the processing system SYSb may determine a processed state of the workpiece W in real-time based on the measured result of the workpiece W by the measurement apparatus 82b. As a result, the processing system SYSb may properly set the processing condition based on the processed state of the workpiece W that is determined in real-time so that the proper additive processing operation is performed. For example, when the workpiece W is irradiated with the measurement light ML after the additive processing operation ends, the processing system SYSb may determine the state of the workpiece W that is has been already processed based on the measured result of the workpiece W by the measurement apparatus 82b. As a result, the processing system SYSb may determine based on the state of the workpiece W that has been already processed whether or not the proper additive processing operation is performed. Furthermore, when it is determined that the proper additive processing operation is not performed, the processing system SYSb may process the workpiece W again.

### (3) Processing System SYS in Third Example Embodiment

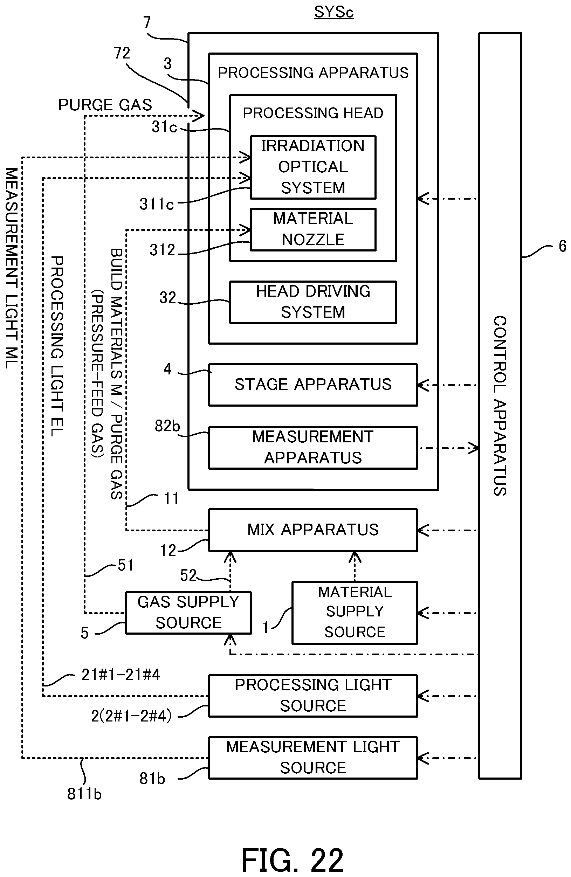

Next, with reference to FIG. 22, the processing system SYS in a third example embodiment (hereinafter, the processing system SYS in the third example embodiment is referred to as a "processing system SYSc") will be described. FIG. 22 is a system configuration diagram that illustrates a system configuration of the processing system SYSc in the third example embodiment.

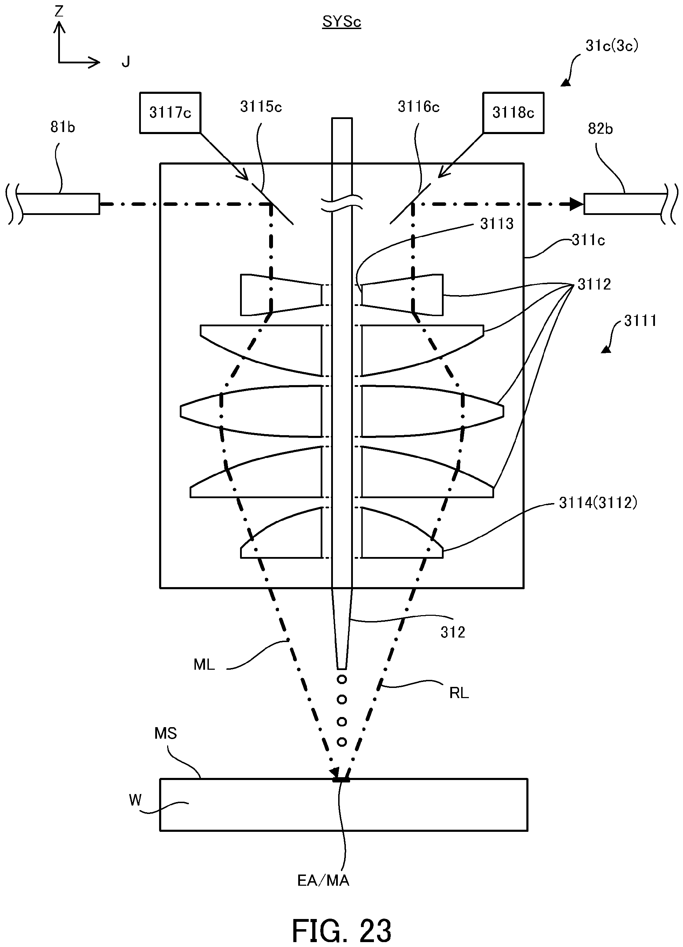

As illustrated in FIG. 22, the processing system SYSb in the third example embodiment is different from the above described processing system SYSb in the second example embodiment in that it includes a processing apparatus 3c instead of the processing apparatus 3. Another feature of the processing system SYSc may be same as another feature of the processing system SYSb. The processing apparatus 3c is different from the processing apparatus 3 in that it includes a processing head 31c instead of the processing head 31. Another feature of the processing apparatus 3c may be same as another feature of the processing apparatus 3. The processing head 31c is different from the processing head 31 in that it includes an irradiation optical system 311c instead of the irradiation optical system 311. Another feature of the processing head 31c may be same as another feature of the processing head 31. Thus, next, with reference to FIG. 23, the irradiation optical system 311c will be described. FIG. 23 is a cross-sectional view that illustrates a configuration of the irradiation optical system 311c in the third example embodiment.

As illustrated in FIG. 23, the irradiation optical system 311c is different from the irradiation optical system 311 in that it includes a movable mirrors 3115c and 3116c and a movable mirror driving apparatus 3117c and 3118c. Another feature of the irradiation optical system 311c may be same as another feature of the irradiation optical system 311.

The movable mirror 3115c is disposed on the optical path of the measurement light ML emitted from the measurement light source 81b. In an example illustrated in FIG. 23, the movable mirror 3115c is disposed on the optical path of the measurement light ML between the measurement light source 81b and the condensing optical system 3111. In this case, the movable mirror 3115c guides the measurement light ML to the condensing optical system 3111 by reflecting the measurement light ML entering a reflection surface of the movable mirror 3115c. The movable mirror 3116c is disposed on the optical path of the object light RL emitted from the workpiece W. In the example illustrated in FIG. 23, the movable mirror 3116c is disposed on the optical path of the object light RL between the condensing optical system 3111 and the measurement apparatus 82b. In this case, the movable mirror 3116c guides the object light RL to the measurement apparatus 82b by reflecting the object light RL entering a reflection surface of the movable mirror 3116c.

The movable mirror 3115c is movable by the movable mirror driving apparatus 3117c so as to change an angle of the reflection surface of the movable mirror 3115c relative to the propagating direction of the measurement light ML entering the movable mirror 3115c. The movable mirror 3116c is movable by the movable mirror driving apparatus 3118c so as to change an angle of the reflection surface of the movable mirror 3116c relative to the propagating direction of the object light RL entering the movable mirror 3116c. The movable mirror driving apparatuses 3117c and 3118c are configured to change the angles of the reflection surfaces of the movable mirrors 3115c and 3116c under the control of the control apparatus 6.

In the third example embodiment, for example, the movable mirror 3115c may change an irradiation position of the measurement light ML on the build surface MS by changing the angle of the reflection surface of the movable mirror 3115c relative to the propagating direction of the measurement light ML. Thus, the movable mirror 3115c and the movable mirror driving apparatus 3117c may serve as a position change apparatus that is configured to change the irradiation position of the measurement light ML on the build surface MS. Moreover, the movable mirror 3116c may guide, to the measurement apparatus 82b, the object light RL including the returned light of the measurement light ML with which the build surface MS is irradiated by changing the angle of the reflection surface of the movable mirror 3116c relative to the propagating direction of the object light RL in synchronization with the movement of the movable mirror 3115c. Namely, the movable mirror 3116c and the movable mirror driving apparatus 3118c may change the angle of the reflection surface of the movable mirror 3116c relative to the propagating direction of the object light RL so that the measurement apparatus 82b detects the object light RL including the returned light of the measurement light ML even when the irradiation position of the measurement light ML is changed on the build surface MS.

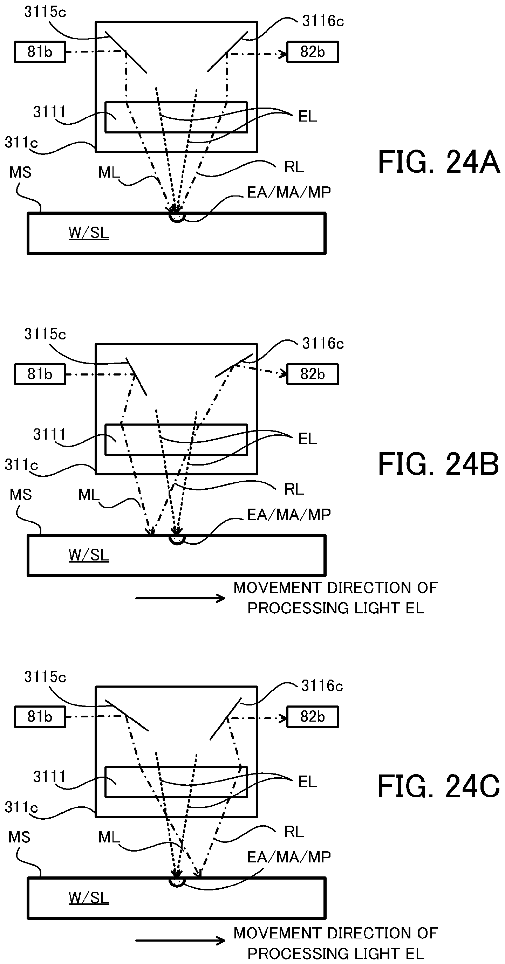

For example, as illustrated in FIG. 24A that is a cross-sectional view illustrating a first example of the optical path of the measurement light ML with which the build surface MS is irradiated, the movable mirror 3115c may change the angle of the reflection surface of the movable mirror 3115c relative to the propagating direction of the measurement light ML so that a position on the build surface MS that is currently being irradiated with the processing lights EL is irradiated with the measurement light ML. Moreover, in this case, the movable mirror 3116c may change the angle of the reflection surface of the movable mirror 3116c relative to the propagating direction of the object light RL so that the object light RL including a light from the position on the build surface MS that is currently being irradiated with the processing lights EL enters the measurement apparatus 82b. As a result, the processing system SYSc may determine the processed state of the workpiece W in real-time based on the measured result of the workpiece W by the measurement apparatus 82b. Thus, the processing system SYSc may properly set the processing condition based on the processed state of the workpiece W that is determined in real-time so that the proper additive processing operation is performed.

For example, as illustrated in FIG. 24B that is a cross-sectional view illustrating a second example of the optical path of the measurement light ML with which the build surface MS is irradiated, the movable mirror 3115c may change the angle of the reflection surface of the movable mirror 3115c relative to the propagating direction of the measurement light ML so that a position on the build surface MS that has been already irradiated with the processing light EL is irradiated with the measurement light ML. Note that the position that has been already irradiated with the processing light EL is located at a rear side along the moving direction of the processing lights EL (namely, the moving direction of the target irradiation areas EA) in a direction along the build surface MS from the position that is currently being irradiated with the processing lights EL. Moreover, in this case, the movable mirror 3116c may change the angle of the reflection surface of the movable mirror 3116c relative to the propagating direction of the object light RL so that the object light RL including a light from the position on the build surface MS that has been already irradiated with the processing lights EL enters the measurement apparatus 82b. As a result, the processing system SYSc may determine the state of the workpiece W that has been already processed based on the measured result of the workpiece W by the measurement apparatus 82b. Thus, the processing system SYSc may properly determine based on the state of the workpiece W that has been already processed whether or not the proper additive processing operation is performed.

For example, as illustrated in FIG. 24C that is a cross-sectional view illustrating a third example of the optical path of the measurement light ML with which the build surface MS is irradiated, the movable mirror 3115c may change the angle of the reflection surface of the movable mirror 3115c relative to the propagating direction of the measurement light ML so that a position on the build surface MS that is not yet irradiated with the processing lights EL (specifically, that is expected to be irradiated with the processing lights EL in the future) is irradiated with the measurement light ML. Note that the position that is expected to be irradiated with the processing lights EL in the future is located at a front side along the moving direction of the processing lights EL (namely, the moving direction of the target irradiation areas EA) in a direction along the build surface MS from the position that is currently being irradiated with the processing lights EL. Moreover, in this case, the movable mirror 3116c may change the angle of the reflection surface of the movable mirror 3116c relative to the propagating direction of the object light RL so that the object light RL including a light from the position on the build surface MS that is expected to be irradiated with the processing lights EL in the future enters the measurement apparatus 82b. As a result, the processing system SYSc may determine the state of the workpiece W that is not yet processed based on the measured result of the workpiece W by the measurement apparatus 82b. Thus, the processing system SYSc may properly set the processing condition based on the state of the workpiece W that is not yet processed so that the proper additive processing operation is performed.

As described above, the above described processing system SYSc in the third example embodiment is capable of achieving an effect that is same as the effect achievable by the above described processing system SYSb in the second example embodiment.

Note that an effect that is same as the effect of the processing system SYSc in the third example embodiment is achievable by changing angles of the emitting ports of the light transmitting members 21#1 to 21#4 in the first example embodiment to there by change propagating directions of the processing lights EL#1 to EL#4 emitted from the light transmitting members 21#1 to 21#4.

### (4) Processing System SYS in Fourth Example Embodiment

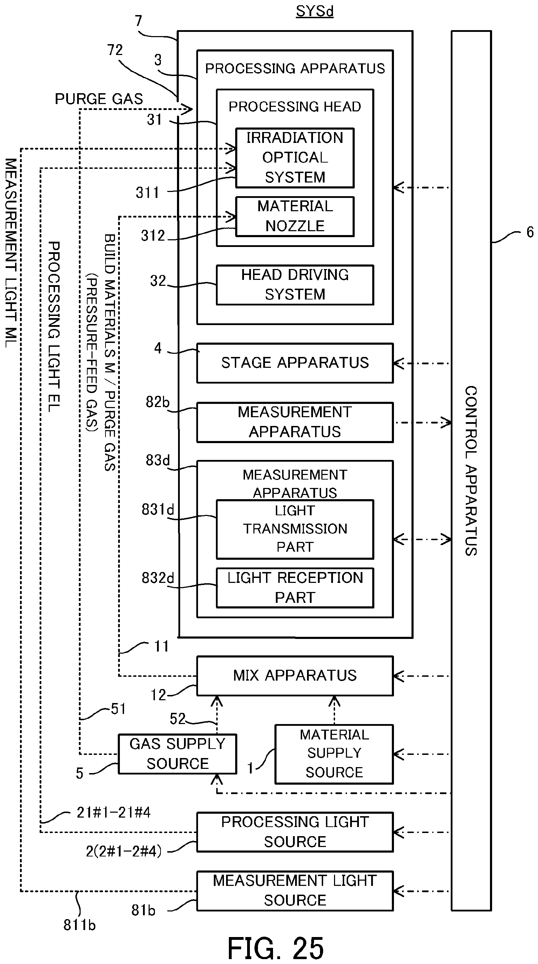

Next, with reference to FIG. 25, the processing system SYS in a fourth example embodiment (hereinafter, the processing system SYS in the fourth example embodiment is referred to as a "processing system SYSd") will be described. FIG. 25 is a system configuration diagram that illustrates a system configuration of the processing system SYSd in the fourth example embodiment.

As illustrated in FIG. 25, the processing system SYSd in the fourth example embodiment is different from the above described processing system SYSb in the second example embodiment in that it includes a measurement apparatus 83d. Another feature of the processing system SYSd may be same as another feature of the processing system SYSb.

The measurement apparatus 83d is an apparatus that is configured to measure the workpiece W, as with the measurement apparatus 82b. However, the measurement apparatus 83d may be an apparatus that is configured to measure the workpiece W by using a measurement method different from that of the measurement apparatus 82b. For example, when the measurement apparatus 82b measures the workpiece W by capturing the image of the workpiece W, the measurement apparatus 83d may be an apparatus that is configured to measure the workpiece W without capturing the image of the workpiece W.

The measurement apparatus 83d is an apparatus that is configured to optically measure the workpiece W through the condensing optical system (namely, through the irradiation optical system 311). In this case, the measurement apparatus 83d may include a light transmission part 831d and a light reception part 832d.

The light transmission part 831d is configured to transmit a measurement light ML' from a not-illustrated light source to the workpiece W through the condensing optical system 3111, for example. Namely, the light transmission part 831d is configured to irradiate the workpiece W with the measurement light ML' from the not-illustrated light source through the condensing optical system 3111. Thus, the light transmission part 831d may be referred to as an irradiation apparatus. Note that the light transmission part 831d may include the light source of the measurement light ML'. The measurement light ML' includes at least one of an infrared light, a visible light and a ultraviolet light, for example. However, the measurement light MI,' may include another type of emission (for example, at least one of a Terahertz wave, a microwave, a X-ray and so on). A wavelength of the measurement light ML' may be different from the wavelength of at least one of the processing light EL and the measurement light ML. A wavelength range of the measurement light MI,' may be different from a wavelength range of at least one of the processing light EL and the measurement light ML. However, the wavelength of the measurement light MI,' may be same as the wavelength of at least one of the processing light EL and the measurement light ML. At least a part of the wavelength range of the measurement light ML' may be superimposed with (namely, overlapped with) at least a part of the wavelength range of at least one of the processing light EL and the measurement light ML.

The irradiation optical system 311 may irradiate an area on the workpiece W that is currently being irradiated with at least one of the measurement light ML and the processing lights EL#1 to EL#4 with the measurement light ML'. The irradiation optical system 311 may irradiate an area including at least a part of the target irradiation areas EA set on the workpiece W with the measurement light ML'. The irradiation optical system 311 may irradiate an area including at least a part of the melt pool MP formed on the workpiece W with the measurement light ML'. However, the irradiation optical system 311 may irradiate an area, which is different from the on the workpiece W that is currently being irradiated with at least one of the measurement light ML and the processing lights EL#1 to EL#4, with the measurement light ML'. The irradiation optical system 311 may irradiate an area, which is different from the area including at least a part of the target irradiation areas EA set on the workpiece W, with the measurement light ML'. The irradiation optical system 311 may irradiate an area, which is different from the area including at least a part of the melt pool MP formed on the workpiece W, with the measurement light ML'.

When the workpiece W is irradiated with the measurement light ML', a returned light RL' generated by irradiating the workpiece W with the measurement light ML' is emitted from the workpiece W. The returned light RL' may include at least one of a reflected light, a scattered light and a transmitted light of the measurement light ML' by the workpiece W. The returned light RL' emitted from the workpiece W (namely, an object light corresponding to the measurement light ML' through the workpiece W) enters the light reception part 832d through the irradiation optical system (namely, through the condensing optical system 3111).

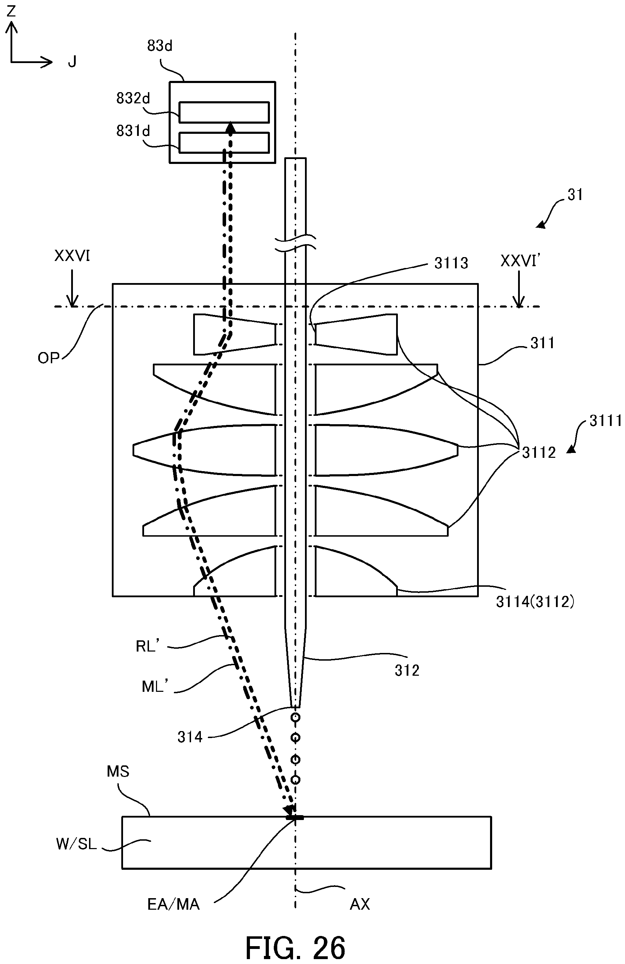

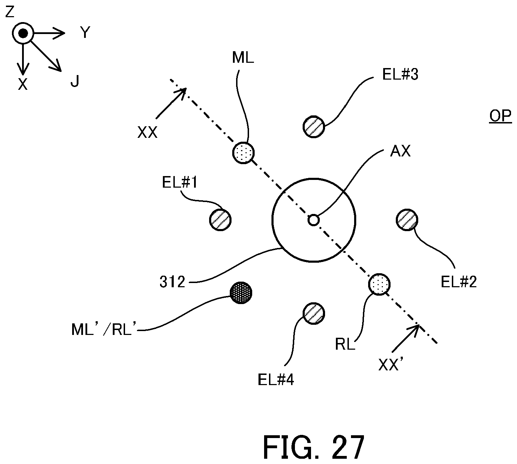

Here, with reference to FIG. 26 and FIG. 27, optical paths of the measurement light ML' and the returned light RL' in the irradiation optical system 311 (especially, in the condensing optical system 3111) will be described. FIG. 26 is a cross-sectional view that illustrates the optical paths of the measurement light ML' and the returned light RL' in the irradiation optical system 311 (especially, in the condensing optical system). FIG. 27 is a XXVI-XXVI' cross-sectional view of FIG. 26.

As illustrated in FIG. 26 and FIG. 27, at least a part of the optical path of the measurement light ML' may be optically separated from (namely, may be different from) at least a part of the optical paths of the measurement light ML, the object light RL and the processing lights EL#1 to EL#4 in the condensing optical system 3111. Thus, as illustrated in FIG. 27, the measurement light ML', the measurement light ML, the object light RL and the processing lights EL#1 to EL#4 may pass through different areas, respectively, that are away from the optical axis AX toward different directions in the virtual optical plane OP (typically, the plane along the XY plane, and the incident pupil plane of the condensing optical system 3111, for example) in the condensing optical system 3111 that intersects with the optical axis AX of the condensing optical system 3111. Alternatively, the measurement light ML', the measurement light ML, the object light RL and the processing lights EL#1 to EL#4 may pass through different areas, respectively, that are away from the optical axis AX toward same direction by different distances in the optical plane OP (see FIG. 6 and FIG. 7).

As illustrated in FIG. 26 and FIG. 27, at least a part of the optical path of the returned light RL' may be optically separated from (namely, may be different from) at least a part of the optical paths of the measurement light ML, the object light RL and the processing lights EL#1 to EL#4 in the condensing optical system 3111. Thus, as illustrated in FIG. 27, the returned light RL', the measurement light ML, the object light RL and the processing lights EL#1 to EL#4 may pass through different areas, respectively, that are away from the optical axis AX toward different directions in the virtual optical plane OP (typically, the plane along the XY plane, and the incident pupil plane of the condensing optical system 3111, for example) in the condensing optical system 3111 that intersects with the optical axis AX of the condensing optical system 3111. Alternatively, the returned light RL', the measurement light ML, the object light RL and the processing lights EL#1 to EL#4 may pass through different areas, respectively, that are away from the optical axis AX toward same direction by different distances in the optical plane OP (see FIG. 6 and FIG. 7).

On the other hand, the optical path of the measurement light ML' and the optical path of the returned light RL' may not be optically separated from each other in the condensing optical system 3111. Namely, the optical path of the measurement light ML' propagating from the light transmission part 831d to the workpiece W and the optical path of the returned light RL' propagating from the workpiece W to the light reception part 832d may be overlapped with each other in the condensing optical system 3111. Thus, as illustrated in FIG. 27, the measurement light ML' and the returned light RL' may pass through a same area in the condensing optical system 3111. However, at least a part of the optical path of the measurement light ML' and at least a part of the optical path of the returned light RL' may be optically separated from each other in the condensing optical system 3111.

The returned light RL' entering the condensing optical system 3111 is optically received (in other words, detected) by the light reception part 832d through the condensing optical system 3111 (namely, through the irradiation optical system 311). Thus, the light reception part 832d is configured to measure (in other words, observe or monitor) the workpiece W by detecting the returned light RL'.

A laser distance meter is one example of the measurement apparatus 83d including the light transmission part 831d and the light reception part 832d. As the laser distance meter, a meter using a measurement method of a Time Of Flight method may be used as one example. In this case, the control apparatus 6 may calculate a distance between the measurement apparatus 83d and the workpiece W (especially, a distance between the measurement apparatus 83d and a position on the workpiece W that is irradiated with the measurement light ML') based on a detected result of the returned light RL' by the measurement apparatus 83d. When the measurement apparatus 83d irradiates a plurality of positions on the workpiece W with the measurement light ML', the control apparatus 6 may calculate distances between the measurement apparatus 83d and the plurality of positions on the workpiece W based on a detected result of the returned light RL' by the measurement apparatus 83d. As a result, the control apparatus 6 may calculate at least one of a position and a shape of the workpiece W based on the distances between the measurement apparatus 83d and the plurality of positions on the workpiece W. In this case, the control apparatus 6 may control the processing system SYSd so as to process the workpiece W based on at least one of the position and the shape of the workpiece W. Note that a meter using a measurement method of an interference method may be used as the laser distance meter.

The above described processing system SYSd in the fourth example embodiment is capable of achieving an effect that is same as the effect achievable by the above described processing system SYSb in the second example embodiment. Furthermore, the processing system SYSd is capable of processing the workpiece W based on the measured result of the workpiece W by the measurement apparatus 83d in addition to the measured result of the workpiece W by the measurement apparatus 83d. Thus, the processing system SYSd is capable of properly processing the workpiece W.

Note that at least one of the processing system SYSa in the first example embodiment and the processing system SYSc in the third example embodiment may include a feature unique to the processing system SYSd in the fourth example embodiment. The feature unique to the processing system SYSd in the fourth example embodiment is feature related to the measurement apparatus 83d.

### (5) Processing System SYS in Fifth Example Embodiment

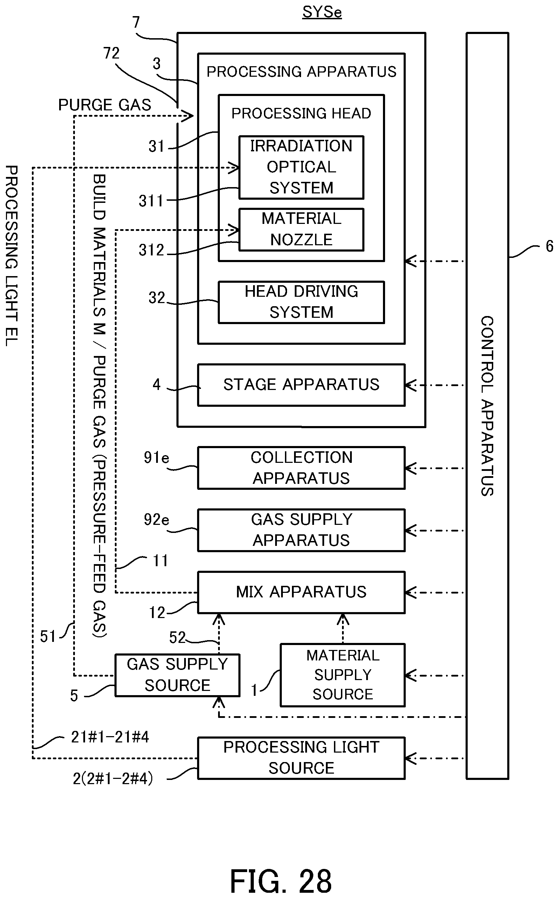

Next, with reference to FIG. 28, the processing system SYS in a fifth example embodiment (hereinafter, the processing system SYS in the fifth example embodiment is referred to as a "processing system SYSe") will be described. FIG. 28 is a system configuration diagram that illustrates a system configuration of the processing system SYSe in the fifth example embodiment.

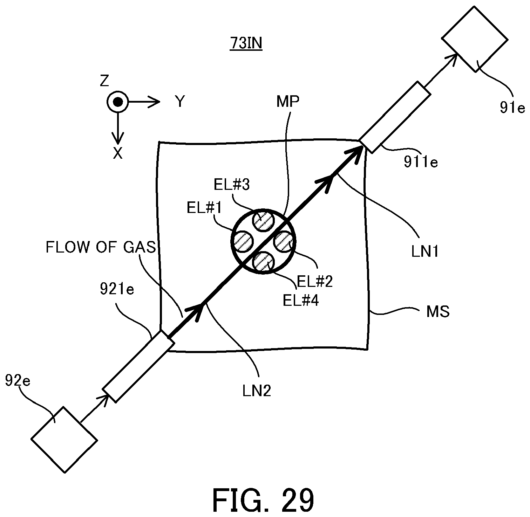

As illustrated in FIG. 28, the processing system SYSe in the fifth example embodiment is different from the above described processing system SYSa in the first example embodiment in that it includes a collection apparatus 91e and a gas supply apparatus 92e. Another feature of the processing system SYSe may be same as another feature of the processing system SYSa. Next, with reference to FIG. 29, operations of the collection apparatus 91e and the gas supply apparatus 92e will be described. FIG. 29 is a planar view that conceptionally illustrates the operations of the collection apparatus 91e and the gas supply apparatus 92e.

The collection apparatus 91e is configured to collect unnecessary substance generated by the irradiation with the processing lights EL from the chamber space 73IN. Specifically, the collection apparatus 91e collects the unnecessary substance through a collection port 911e disposed in the chamber space 73IN. The collection port 911e is directed toward the build surface MS that is irradiated with the processing lights EL. Especially, there is a high possibility that the unnecessary substance is generated from a position that is irradiated with the processing lights EL (namely, a position at which the melt pool MP is formed). Thus, the collection port 911e may be directed toward the position at which the melt pool MP is formed.

When the processing lights EL are shielded by the collection port 911e, there is a possibility that the processing of the workpiece W by using the processing lights EL is affected. Thus, the collection port 911e may be disposed at a position that is away from the optical paths of the processing lights EL along a direction that intersects with the propagating directions of the processing lights EL (namely, a direction that intersects with the optical axis AX of the condensing optical system 3111, and typically a direction along the XY plane). Namely, the collection port 911e may be disposed at a position that is away from the melt pool MP, which is irradiated with the processing lights EL, along the direction that intersects with the propagating directions of the processing lights EL.

The collection apparatus 91e collects the unnecessary substance together with a gas in the chamber space 73IN by sucking the gas in the chamber space 73IN (namely, exhausting the gas in the chamber space 73IN) through the collection port 911e. Thus, typically, a flow of the gas from the melt pool MP to the collection port 911e is formed. The unnecessary substance is moved to the collection port 911e from the melt pool MP that is a main source of the unnecessary substance. As a result, the unnecessary substance is collected through the collection port 911e. Here, when the flow of the gas (namely, a collection route of the unnecessary substance) from the melt pool MP to the collection port 911e exists on the optical paths of the processing lights EL, there is a possibility that the irradiation of the workpiece W with the processing lights EL is prevented by the unnecessary substance. Thus, the collection port 911e may collect the unnecessary substance so that the flow of the gas (namely, the collection route of the unnecessary substance) flowing from the melt pool MP to the collection port 911e does not exist on the optical paths of the processing lights EL. For example, as illustrated in FIG. 29, the collection port 911e may be disposed at a position that satisfies such a condition that a position that is away from a straight line including a line LN1 connecting the melt pool MP and the collection port 911e (namely, a straight line along the flow of the gas formed by the collection port 911e, and a straight line extending along the collection route of the unnecessary substance) toward a direction intersecting with both of this straight line and the optical paths of the processing lights EL (namely, the optical axis AX of the condensing optical system 3111) is irradiated with the processing lights EL. Conversely, the condensing optical system 3111 may irradiate the build surface MS with the processing lights EL so that the flow of the gas flowing from the melt pool MP to the collection port 911e does not exist on the optical paths of the processing lights EL. For example, as illustrated in FIG. 29, the condensing optical system 3111 may irradiate the position that is away from the straight line including the line LN1 connecting the melt pool MP and the collection port 911e toward the direction intersecting with both of this straight line and the optical path of the processing light EL with the processing lights EL.

The gas supply apparatus 92e is configured to form a flow of the gas for removing the unnecessary substance generated by the irradiation with the processing lights EL from the build surface MS or a space facing the build surface MS by supplying the gas to the chamber space 73IN. Specifically, the gas supply apparatus 92e supplies the gas to the chamber space 73IN through a gas supply port 921e disposed in the chamber space 73IN. The gas supply port 921e is directed toward the build surface MS that is irradiated with the processing lights EL. Especially, the gas supply port 921e may be directed toward the position at which the melt pool MP that is the main source of the unnecessary substance is formed.

When the processing lights EL are shielded by the gas supply port 921e, there is a possibility that the processing of the workpiece W by using the processing lights EL is affected. Thus, the gas supply port 921e may be disposed at a position that is away from the optical paths of the processing lights EL along a direction that intersects with the propagating directions of the processing lights EL (namely, a direction that intersects with the optical axis AX of the condensing optical system 3111, and typically a direction along the XY plane). Namely, the gas supply port 921e may be disposed at a position that is away from the melt pool MP, which is irradiated with the processing lights EL, along the direction that intersects with the propagating directions of the processing lights EL.

The gas supply apparatus 92e forms the flow of the gas from the gas supply port 921e by supplying the gas to the chamber space 73IN from the gas supply port 921e. The unnecessary substance is removed from the build surface MS or the space facing the build surface MS by the flow of the gas. Here, when the flow of the gas (namely, a removal route of the unnecessary substance) from the gas supply port 921e exists on the optical paths of the processing lights EL, there is a possibility that the irradiation of the workpiece W with the processing lights EL is prevented by the unnecessary substance. Thus, the gas supply port 921e may supply the gas so that the flow of the gas (namely, the removal route of the unnecessary substance) from the gas supply port 921e does not exist on the optical paths of the processing lights EL. For example, as illustrated in FIG. 29, the gas supply port 921e may be disposed at a position that satisfies such a condition that a position that is away from a straight line including a line LN2 connecting the melt pool MP and the gas supply port 921e (namely, a straight line along the flow of the gas formed by the gas supply port 921e, and a straight line extending along the removal route of the unnecessary substance) toward a direction intersecting with both of this straight line and the optical paths of the processing lights EL (namely, the optical axis AX of the condensing optical system 3111) is irradiated with the processing lights EL. Conversely, the condensing optical system 3111 may irradiate the build surface MS with the processing lights EL so that the flow of the gas (namely, the removal route of the unnecessary substance) from the gas supply port 921e does not exist on the optical paths of the processing lights EL. For example, as illustrated in FIG. 29, the condensing optical system 3111 may irradiate the position that is away from the straight line including the line LN2 connecting the melt pool MP and the gas supply port 921e toward the direction intersecting with both of this straight line and the optical path of the processing light EL with the processing lights EL.

The unnecessary substance removed by the gas supplied from the gas supply apparatus 92e may be collected by the collection apparatus 91e. In this case, in order to improve an efficiency for removing the unnecessary substance by the gas supply apparatus 92e and an efficiency for collecting the unnecessary substance by the collection apparatus 91e, the gas supply port 921e and the collection port 911e may be disposed so that the melt pool MP that is the main source of the unnecessary substance is located between the gas supply port 921e and the collection port 911e. In this case, a flow of the gas that flows from the gas supply port 921 to the collection port 911e through the melt pool MP that is the source of the unnecessary substance is formed, and thus, the unnecessary substance is efficiently removed and collected.

The above described processing system SYSe in the fifth example embodiment is capable of achieving an effect that is same as the effect achievable by the above described processing system SYSa in the first example embodiment. Furthermore, the processing system SYSe is capable of properly removing and / or collecting the unnecessary substance generated by the irradiation with the processing lights EL. Thus, the processing system SYSe is capable of properly reducing an influence caused by the unnecessary substance preventing the irradiation of the workpiece W with the processing lights EL. Thus, the processing system SYSe is capable of properly processing the workpiece W.

Note that the processing system SYSe includes both of the collection apparatus 91e and the gas supply apparatus 92e in the above described description. However, the processing system SYSe may include the collection apparatus 91e and may not include the gas supply apparatus 92e. The processing system SYSe may include the gas supply apparatus 92e and may not include the collection apparatus 91e.

Moreover, in the above described description, the processing system SYSe removes the unnecessary substance by using the gas supplied from the gas supply apparatus 92e. However, the processing system SYSe may remove the unnecessary substance by using the gas (namely, the purge gas) supplied from the gas supply source 5. Namely, the processing system SYSe may remove the unnecessary substance by supplying the purge gas to the chamber space 73IN through the gas supply port 921e. In this case, the processing system SYSe may not include the gas supply apparatus 92e.

Moreover, at least one of the processing system SYSb in the second example embodiment to the processing system SYSd in the fourth example embodiment may include a feature unique to the processing system SYSe in the fifth example embodiment. The feature unique to the processing system SYSe in the fifth example embodiment is feature related to at least one of the collection apparatus 91e and the gas supply apparatus 92e.

### (6) Processing System SYS in Sixth Example Embodiment

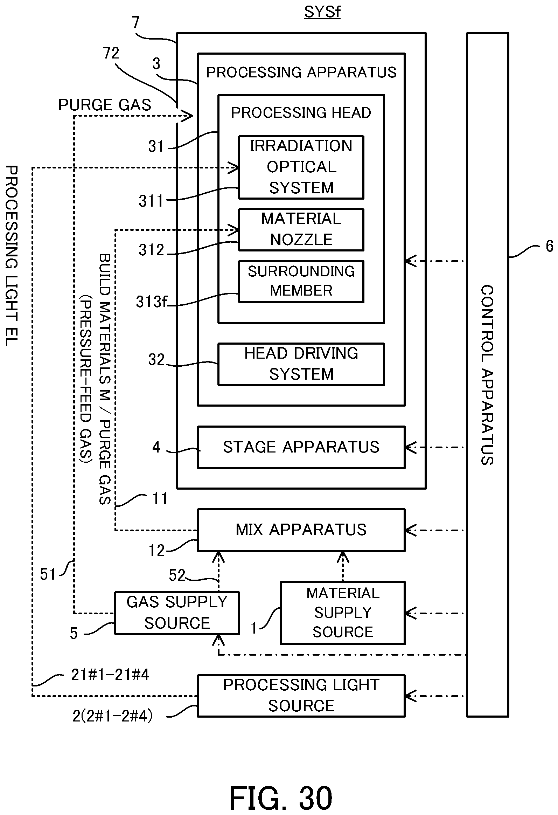

Next, with reference to FIG. 30, the processing system SYS in a sixth example embodiment (hereinafter, the processing system SYS in the sixth example embodiment is referred to as a "processing system SYSf') will be described. FIG. 30 is a system configuration diagram that illustrates a system configuration of the processing system SYSf in the sixth example embodiment.

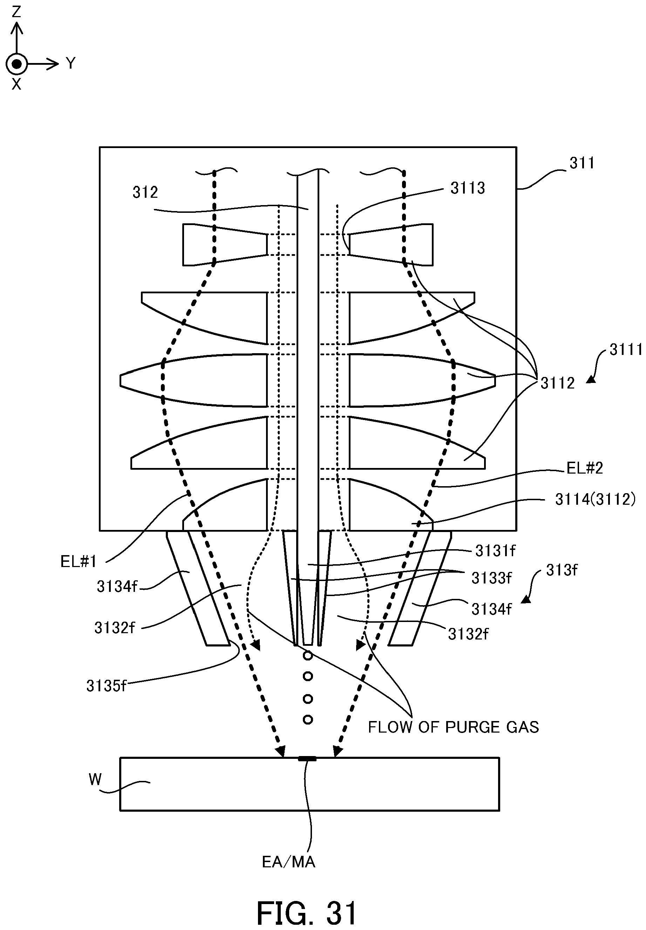

As illustrated in FIG. 30, the processing system SYSf in the sixth example embodiment is different from the above described processing system SYSa in the first example embodiment in that it includes a processing apparatus 3f instead of the processing apparatus 3. Moreover, the processing system SYSf is different from the processing system SYSa in that it includes a gas supply apparatus 93f. Another feature of the processing system SYSf may be same as another feature of the processing system SYSa. The processing apparatus 3f is different from the processing apparatus 3 in that it includes a processing head 31f instead of the processing head 31. Another feature of the processing apparatus 3f may be same as another feature of the processing apparatus 3. The processing head 31f is different from the processing head 31 in that it includes surrounding member 313f. Another feature of the processing head 31f may be same as another feature of the processing head 31. Thus, next, with reference to FIG. 31, the surrounding member 313f will be described. FIG. 31 is a cross-sectional view that illustrates a configuration of the surrounding member 313f in the sixth example embodiment.

As illustrated in FIG. 31, the surrounding member 313f is attached to a tip (specifically, a tip at the -Z side facing toward the workpiece W) of the irradiation optical system 311. Namely, the surrounding member 313f is attached to a tip of the condensing optical system 3111.

The surrounding member 313f surrounds at least a part of the material nozzle 312. Namely, the surrounding member 313f surrounds at least a part of the supply path of the build materials M of the material nozzle 312. Specifically, the surrounding member 313f surrounds at least a part of the material nozzle 312 that protrudes downwardly from the irradiation optical system 311. Thus, a through-hole 3131f into which a part of the material nozzle 312 is inserter is formed in the surrounding member 313f. Furthermore, a through-hole 3132f for forming a space through which the processing lights EL emitted from the condensing optical system 3111 pass is formed in the surrounding member 313f. Thus, the surrounding member 313f may include an inner wall member 3133f that surrounds the material nozzle 312 to form the through-hole 3131f and an outer wall member 3134f that forms the through-hole 3132f with the inner wall member 3133f (namely, surrounds the inner wall member 3133f to form the through-hole 3132f). namely, the surrounding member 313f may have a structure like a double pipe in which a pipe in which the material nozzle 312 is disposed and a pipe through which the processing lights EL pass are formed. In this case, the condensing optical system 3111f irradiates the workpiece W with the processing lights EL through a space between the outer wall member 3134f and the inner wall member 3133f (namely, a space between the outer wall member 3134f and the material nozzle 312). Note that each of the inner wall member 3133f and the outer wall member 3134f may be referred to as a wall member.

The through-hole 3132f is connected to the aperture 3113 (especially, the aperture 3113 of the terminal optical member 3114 of the condensing optical system 3111). Here, as described above, the purge gas supplied from the gas supply source 5 to the chamber space 73IN is supplied to the space at the emitting plane side of the terminal optical member 3114 (typically, the workpiece W) through the apertures 3113. Thus, when the through-hole 3132f is connected to the aperture 3113, the purge gas supplied from the gas supply source 5 to the chamber space 73IN is supplied to a space below the surrounding member 313f (namely, a space between the surrounding member 313f and the workpiece W) through the aperture 3113 and the through-hole 3132f. Specifically, the purge gas is supplied to the through-hole 3132f corresponding to a space between the surrounding member 313f and the material nozzle 312 (specifically, a space between the outer wall member 3134f and the material nozzle 312) through the aperture 3113 of the terminal optical member 3114. The purge gas supplied to the through-hole 3132f is supplied to the space below the surrounding member 313f through an outlet port 3135df corresponding to a lower end of the through-hole 3132f. Namely, the purge gas supplied to the through-hole 3132f is supplied to the workpiece W located below the surrounding member 313f from the outlet port 3135f. In this case, the surrounding member 3131fd may serve as a gas guide member that guides the purge gas from the aperture 3113 of the terminal optical member 3114 to the workpiece W.

Even in this case, there is a high possibility that the build materials M from the supply outlet 314 is supplied along the supply path that is directed downwardly from the material nozzle 312 due to the flow of the gas supplied through the through-hole 3132f, as described in the first example embodiment. Namely, there is a low possibility that the build materials M from the supply outlet 314 are scattered toward all directions from the material nozzle 312. As a result, the material nozzle 312 is capable of properly supplying the build materials M. This effect is more pronounced when the outlet port 3135f is formed near the supply outlet 314.

Furthermore, the flow of the purge gas flowing from an inside of the through-hole 3132f to an outside of the through-hole 3132f is formed in the through-hole 3132f through which the processing lights EL pass. Thus, there is a low possibility that the unnecessary substance generated by irradiating the workpiece W with the processing lights EL enters the inside of the through-hole 3132f. Thus, the influence caused by the unnecessary substance preventing the irradiation of the workpiece W with the processing lights EL is reduced.

The above described processing system SYSf in the sixth example embodiment is capable of achieving an effect that is same as the effect achievable by the above described processing system SYSa in the first example embodiment. Furthermore, the processing system SYSf is capable of properly supplying the build materials M along the supply path directed downwardly from the material nozzle 312 by using the purge gas supplied through the surrounding member 313f, as described above. Namely, the processing system SYSf is capable of improving the directional characteristic of the supply direction of the build materials M. Furthermore, the processing system SYSf is capable of reducing the influence caused by the unnecessary substance preventing the irradiation of the workpiece W with the processing lights EL by using the purge gas supplied through the surrounding member 313f.

Moreover, at least one of the processing system SYSb in the second example embodiment to the processing system SYSe in the fifth example embodiment may include a feature unique to the processing system SYSf in the sixth example embodiment. The feature unique to the processing system SYSf in the sixth example embodiment is feature related to the surrounding member 313f.

### (7) Processing System SYS in Seventh Example Embodiment

Next, the processing system SYS in a seventh example embodiment (hereinafter, the processing system SYS in the seventh example embodiment is referred to as a "processing system SYSg") will be described. The processing system SYSg in the seventh example embodiment is different from the above described processing system SYSa in the first example embodiment in that it may perform a removal processing for removing a part of the workpiece W by irradiating the workpiece W with the processing lights EL. For example, the processing system SYSg may perform the removal processing so that a shape of the workpiece W is a desired shape. For example, the processing system SYSg may perform the removal processing to form a desired structure on the workpiece W. For example, the processing system SYSg may perform the removal processing to form a desired structure on the surface of the workpiece W. For example, the processing system SYSg may perform the removal processing so that the surface of the workpiece W is smoothed.

When the removal processing is performed, the processing system SYSg may form a riblet structure on the workpiece W. The riblet structure may be a structure by which a resistance (especially, at least one of a frictional resistance and a turbulent frictional resistance) of the surface of the workpiece W to a fluid is reducible. The riblet structure may include a structure by which a noise, which is generated when the fluid and the surface of the workpiece W relatively move, is reducible. The riblet structure may include a structure in which a plurality of grooves each of which extends along a first direction (for example, the Y axis direction) that is along the surface of the workpiece W are arranged along a second direction (for example, the X axis direction) that is along the surface of the workpiece W and that intersects with the first direction, for example.

When the removal processing is performed, the processing system SYSg may form any structure having any shape on the surface of the workpiece W. A structure that generates a swirl relative to a flow of the fluid on the surface of the workpiece W is one example of any structure. A structure for giving a hydrophobic property to the workpiece W is one example of any structure. A fine texture structure (typically, a concave and convex structure) that is formed regularly or irregularly in a micro / nano-meter order is another example of any structure. This fine texture structure may include at least one of a shark skin structure and a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function, a concave and convex structure that improve an adhesion to a layer formed on the surface and so on.

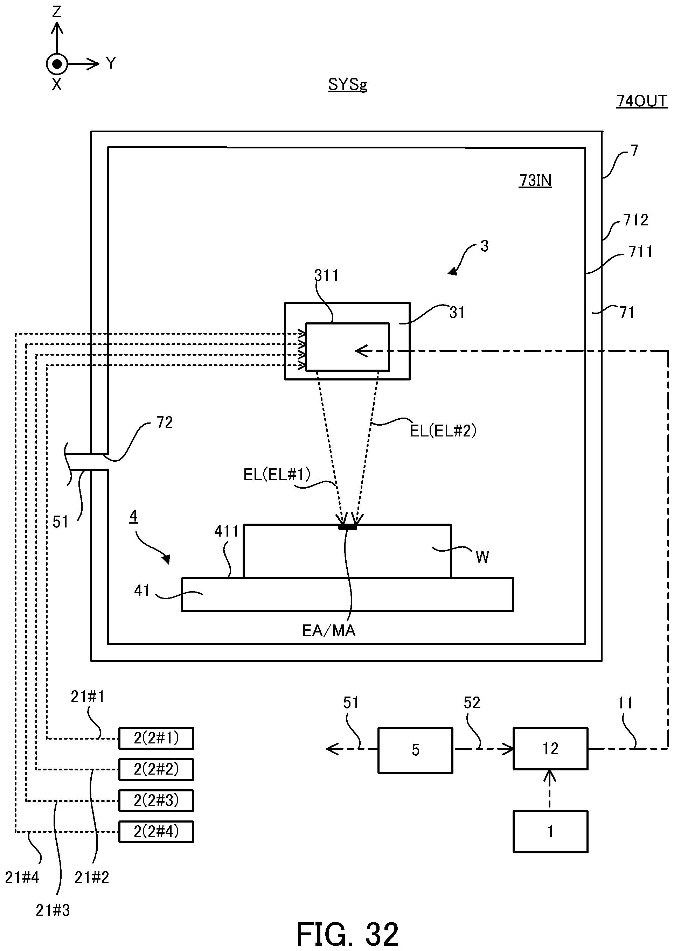

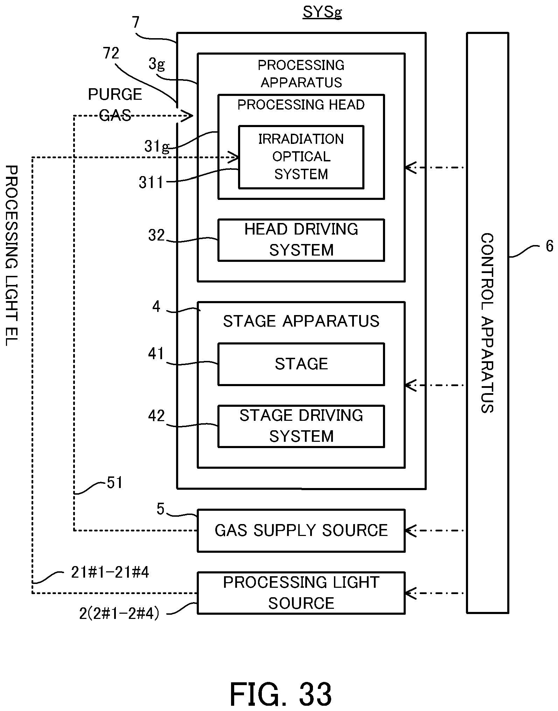

FIG. 32 and FIG. 33 illustrates the processing system SYSb. FIG. 32 is a block diagram that illustrates a system configuration of the processing system SYSg. FIG. 33 is a cross-sectional view that illustrates a configuration of the processing system SYSg. As illustrated in FIG. 32 and FIG. 33, the processing system SYSg is different from the processing system SYSa in that it may not include the material supply source 1 and the mix apparatus 12. Furthermore, the processing system SYSg is different from the processing system SYSa in that it may not includes the material nozzle 312. Specifically, the processing system SYSg is different from the processing system SYSa in that it includes a processing apparatus 3g including a processing head 31g that does not include the material nozzle 312 instead of the processing apparatus 3 including the processing head 31 that includes the material nozzle 312. Namely, the processing system SYSg is different from the processing system SYSa in that it may not include a component for supplying the build materials M. Another feature of the processing system SYSg may be same as another feature of the processing system SYSa.

The above described processing system SYSg may also perform the light characteristic control operation in at least a part of a period during which the removal processing operation is performed, as with the processing system SYSa. As a result, the processing system SYSg is capable of achieving an effect that is same as the effect achievable by the above described processing system SYSa.

Incidentally, when the removal processing is performed, the processing system SYSg may irradiate the workpiece W with the processing light EL including a plurality of pulsed lights. For example, the processing system SYSg may irradiate the workpiece W with the processing light EL including the plurality of pulsed lights the ON time of which is equal to or shorter than nano-seconds.

### (8) Other Modified Example

In the above described description, the processing system SYS irradiates the workpiece W with the plurality of processing lights EL emitted from the plurality of processing light sources 2, respectively. Namely, the processing system SYS includes the plurality of processing light sources 2. However, the processing system SYS may divide a single light emitted from a single processing light source 2 into the plurality of processing lights EL and irradiate the workpiece W with the plurality of divided processing lights EL. Namely, the processing system SYS may include the single processing light source 2. Here, each of the intensities of the plurality of divided processing lights EL may be changeable independently. Changing the intensity may include changing the intensity to be zero. In this case, a shutter may be disposed in each of the optical paths of the plurality of divided processing lights EL. Moreover, a light intensity adjustment member for actively changing the transmitted light intensity may be disposed in each of the optical paths of the plurality of divided processing lights EL in addition to or instead of disposing the shutter.

In the above described description, the processing system SYS processes the workpiece W by irradiating the workpiece W with the processing lights EL. However, the processing system SYS may process the workpiece W by irradiating the workpiece W with any energy beam. In this case, the processing system SYS may include a beam source that is configured to generate any energy beam and a beam irradiation apparatus that is configured to irradiate the workpiece W with any energy beam in addition to or instead of the processing light source 2 and the irradiation optical system 311. At least one of a charged particle beam, an electromagnetic wave and the like is one example of any energy beam. A least one of an electron beam, an ion beam and the like is one example of the charged particle beam.

When the workpiece W is processed by any energy beam, the control apparatus 6 may control a characteristic of the energy beam by performing the above described light characteristic control operation. The characteristic of the energy beam may include an energy amount of the energy beam, for example. When the charged particle beam is used as the energy beam, the characteristic of the energy beam (namely, the characteristic of the charged particle beam) may include an electrical current density distribution of the charged particle beam (for example, an electrical current density distribution in a plane (typically, the build surface MS) intersecting with the propagating direction of the processing light EL), for example.

### (9) Supplementary Note

With respect to the example embodiments described above, the following Supplementary Notes will be further disclosed.

### [Supplementary Note 1]

A processing system that is configured to process an object, wherein
the processing system includes:
an irradiation optical system that is configured to irradiate the object with a plurality of energy beams; and
a beam characteristic change apparatus that is configured to change characteristics of the plurality of energy beams individually.

### [Supplementary Note 2]

A processing system that is configured to process an object, wherein
the processing system includes:
an irradiation optical system that is configured to form a melt pool on the object by irradiating the object with a plurality of energy beams; and
a beam characteristic change apparatus that is configured change a temperature distribution of the melt pool by changing characteristics of the plurality of energy beams individually.

### [Supplementary Note 3]

The processing system according to the Supplementary Note 1 including a detection apparatus that is configured to detect a light from the melt pool,
the beam characteristic change apparatus being configured to change a distribution of the energy beam based on a detected result by the detection apparatus.

### [Supplementary Note 4]

A processing system that is configured to process an object, wherein
the processing system includes:
an irradiation optical system that is configured to irradiate the object with a plurality of energy beams;
a movement apparatus that is configured to move at least one of the object and irradiation positions of the energy beams; and
a beam characteristic change apparatus that is configured to change characteristics of the plurality of energy beams individually based on a moving direction by the movement apparatus.

### [Supplementary Note 5]

The processing system according to any one of the Supplementary Notes 1 to 4, wherein
the characteristic of the energy beam includes an intensity of the energy beam.

### [Supplementary Note 6]

A processing system that is configured to process an object, wherein
the processing system includes:
an irradiation optical system that is configured to form a melt pool on the object by irradiating the object with a plurality of energy beams from direction that are different from each other; and
a material supply apparatus that is configured to supply a material to the melt pool.

### [Supplementary Note 7]

The processing system according to the Supplementary Note 6, wherein
a direction along which the material is supplied from the material supply apparatus to the melt pool is different from irradiation directions of the plurality of energy beams.

### [Supplementary Note 8]

The processing system according to the Supplementary Note 6 or 7, wherein
the material supply apparatus is configured to supply the material from a material supply direction intersecting with a surface of the object.

### [Supplementary Note 9]

A processing system that is configured to process an object by using an energy beam, wherein
the processing system includes:
an irradiation optical system that is configured to condense the energy beam to irradiate the obj ect with it;
a material supply apparatus that is configured to supply a material to an irradiation position of the energy beam on the object;
a surrounding member that surrounds at least a part of a supply path of the material by the material supply apparatus; and
a gas supply apparatus that is configured to supply a gas to a space between a plurality of optical members included in the irradiation optical system,
the irradiation optical system emits the energy beam through a space between the surrounding member and at least a part of the material supply apparatus,
the gas from the gas supply apparatus is supplied to the space between the surrounding member and at least a part of the material supply apparatus.

### [Supplementary Note 10]

The processing system according to the Supplementary Note 9, wherein
the gas from the gas supply apparatus is supplied to through an aperture formed at least partial optical member of the optical members included in the irradiation optical system.

### [Supplementary Note 11]

The processing system according to the Supplementary Note 9 or 10, wherein
the at least a part of the material supply apparatus is disposed along an optical axis of the irradiation optical system.

### [Supplementary Note 12]

A processing system that is configured to process an object by using an energy beam, wherein
the processing system comprises:
an irradiation optical system that is configured to irradiate the object with the energy beam; and
a detection apparatus that is configured to detect, through the irradiation optical system, an object light including a light from the object,
at least a part of a path of the object light in the irradiation optical system is different from at least a part of a path of the energy beam in the irradiation optical system.

### [Supplementary Note 13]

The processing system according to the Supplementary Note 12, wherein
the object light is a first object light,
the detection apparatus is a first detection apparatus,
the processing system further includes a second detection apparatus that is configured to detect, through the irradiation optical system, a second object light that includes a light from the object and that is different from the first object light.

### [Supplementary Note 14]

The processing system according to the Supplementary Note 13, wherein
at least a part of a path of the second object light in the irradiation optical system is different from each of at least a part of the path of the energy beam in the irradiation optical system and at least a part of a path of the first object light in the irradiation optical system.

### [Supplementary Note 15]

The processing system according to any one of the Supplementary Notes 12 to 14 further including an irradiation apparatus that is configured to irradiate the object with a measurement light through the irradiation optical system.

### [Supplementary Note 16]

The processing system according to the Supplementary Note 15, wherein
at least a part of a path of the measurement light in the irradiation optical system is different from at least a part of the path of the energy beam in the irradiation optical system.

### [Supplementary Note 17]

The processing system according to the Supplementary Note 15 or 16, wherein
the object light includes a light from the object that is irradiated with the measurement light.

### [Supplementary Note 18]

The processing system according to any one of the Supplementary Notes 15 to 17, wherein
the object light includes at least one of a reflected light, a scattered light and a transmitted light of the measurement light from the object.

### [Supplementary Note 19]

The processing system according to any one of the Supplementary Notes 15 to 18 further including a position change apparatus that is configured to change an irradiation position of the energy beam on the object.

### [Supplementary Note 20]

The processing system according to the Supplementary Note 19, wherein
the position change apparatus is configured to change an irradiation position of the measurement light so that at least one of a first position that has been irradiated with the energy beam on the object, a second position that is being irradiated with the energy beam on the object and a third position that is expected irradiated with the energy beam on the object is irradiated with the measurement light.

### [Supplementary Note 21]

The processing system according to the Supplementary Note 20 further including a light guide optical system that is configured to guide the object light from the first position to the detection apparatus in at least a part of a period during which the first position is irradiated with the measurement light, to guide the object light from the second position to the detection apparatus in at least a part of a period during which the second position is irradiated with the measurement light, and to guide the object light from the third position to the detection apparatus in at least a part of a period during which the third position is irradiated with the measurement light.

### [Supplementary Note 22]

The processing system according to any one of the Supplementary Notes 15 to 21, wherein
the measurement light is a first measurement light,
the irradiation apparatus is a first irradiation apparatus,
the processing system further includes a second irradiation apparatus that is configured to irradiate the object with a second measurement light that is different from the first measurement light through the irradiation optical system.

### [Supplementary Note 23]

The processing system according to the Supplementary Note 22, wherein
at least a part of a path of the second measurement light in the irradiation optical system is different from each of at least a part of the path of the energy beam in the irradiation optical system and at least a part of a path of the first measurement light in the irradiation optical system.

### [Supplementary Note 24]

The processing system according to the Supplementary Note 22 or 23, wherein
the object light is a first object light,
the detection apparatus is a first detection apparatus,
the processing system further includes a second detection apparatus that is configured to detect, through the irradiation optical system, a second object light that includes a light from the object and that is different from the first object light.
the first object light includes a light from the object that is irradiated with the first measurement light,
the second object light includes a light from the object that is irradiated with the second measurement light.

### [Supplementary Note 25]

The processing system according to the Supplementary Note 24, wherein
the first object light includes at least one of a reflected light, a scattered light and a transmitted light of the first measurement light from the obj ect,
the second object light includes at least one of a reflected light, a scattered light and a transmitted light of the second measurement light from the object.

### [Supplementary Note 26]

A processing system that is configured to process an object by using a plurality of energy beams, wherein
the processing system comprises:
a plurality of beam sources that are configured to emit the plurality of energy beams, respectively;
an irradiation optical system that is configured to irradiate the object with the plurality of energy beams from the plurality of beam sources; and
a control apparatus that is configured to change characteristics of the plurality of energy beams individually by controlling each of the plurality of beam sources.

### [Supplementary Note 27]

The processing system according to the Supplementary Note 26, wherein
the control apparatus is configured to control each of the plurality of beam sources so that the characteristic of a first energy beam of the plurality of energy beams is different from the characteristic of a second energy beam of the plurality of energy beams that is different from the first energy beam.

### [Supplementary Note 28]

The processing system according to the Supplementary Note 26 or 27 further including a movement apparatus that is configured to relatively move irradiation positions of the plurality of energy beams relative to the object,
the control apparatus is configured to control each of the plurality of beam sources based on a movement information related to a movement of the irradiation positions of the plurality of energy beams.

### [Supplementary Note 29]

The processing system according to the Supplementary Note 28, wherein
the movement information includes an information related to a moving direction of the irradiation positions of the plurality of energy beams.

### [Supplementary Note 30]

The processing system according to the Supplementary Note 29, wherein
the characteristic of the energy beam includes an intensity of the energy beam,
the control apparatus is configured to control each of the plurality of beam sources so that the intensity of a first energy beam of the plurality of energy beams is lower than the intensity of a second energy beam of the plurality of energy beams that is different from the first energy beam,
the irradiation position of the first energy beam on the object is located at a rear side along the moving direction from the irradiation position of the second energy beam on the obj ect.

### [Supplementary Note 31]

The processing system according to the Supplementary Note 30, wherein
the control apparatus is configured to control each of the plurality of beam sources so that the intensity of the second energy beam is zero.

### [Supplementary Note 32]

The processing system according to any one of the Supplementary Notes 29 to 31, wherein
the control apparatus is configured to control each of the plurality of beam sources so that a first energy beam of the plurality of energy beams is a pulsed beam and a second energy beam of the plurality of energy beams that is different from the first energy beam is a continuous beam,
the irradiation position of the first energy beam on the object is located at a rear side along the moving direction from the irradiation position of the second energy beam on the obj ect.

### [Supplementary Note 33]

The processing system according to any one of the Supplementary Notes 26 to 32, wherein
the control apparatus is configured to control each of the plurality of beam sources based on an object information related to the object.

### [Supplementary Note 34]

The processing system according to the Supplementary Note 33, wherein
the object information includes an information related to a shape of the object.

### [Supplementary Note 35]

The processing system according to the Supplementary Note 34, wherein
the irradiation optical system is configured to irradiate a first part of the object with a third energy beam of the plurality of energy beams,
the control apparatus is configured to control each of the plurality of beam sources so that an intensity of a fourth energy beam of the plurality of energy beams is equal to or lower than a predetermined intensity, a second part of the object exists on a path of the fourth energy beam from the irradiation optical system to the first part.

### [Supplementary Note 36]

The processing system according to the Supplementary Note 35, wherein
the predetermined intensity is an intensity of the energy beam by which the object cannot be processed or zero.

### [Supplementary Note 37]

The processing system according to any one of the Supplementary Notes 26 to 36, wherein
in a predetermined plane intersecting with an optical axis of the irradiation optical system, at least two of the plurality of energy beams pass through areas that are symmetric about the optical axis.

### [Supplementary Note 38]

The processing system according to any one of the Supplementary Notes 26 to 37, wherein
in a predetermined plane intersecting with an optical axis of the irradiation optical system, at least two of the plurality of energy beams pass through areas that are asymmetric about the optical axis.

### [Supplementary Note 39]

The processing system according to any one of the Supplementary Notes 26 to 38, wherein
the plurality of energy beams include a first energy beam, a second energy beam, a third energy beam and a fourth energy beam,
in a predetermined plane intersecting with an optical axis of the irradiation optical system, the first energy beam and the second energy beam pass through positions between which the optical axis exists along a first direction along the predetermined plane,
in the predetermined plane, the third energy beam and the fourth energy beam pass through positions between which the optical axis exists along a second direction that is along the predetermined plane and that intersects with the first direction.

### [Supplementary Note 40]

The processing system according to any one of the Supplementary Notes 26 to 39, wherein
the plurality of energy beams form a ring-shaped bean form in a predetermined plane intersecting with an optical axis of the irradiation optical system.

### [Supplementary Note 41]

The processing system according to any one of the Supplementary Notes 26 to 40, wherein
the processing system forms a melt pool on the object by irradiating the object with the plurality of energy beams,
the processing system further includes a gas supply apparatus that is configured to supply a gas to the melt pool through a supply port disposed at a position that is away from the melt pool,
a position that is away from a straight line, which include a line connecting the melt pool and the supply port, toward a direction intersecting with the straight line is irradiated with plurality of energy beams.

### [Supplementary Note 42]

The processing system according to any one of the Supplementary Notes 26 to 41, wherein
the processing system forms a melt pool on the object by irradiating the object with the plurality of energy beams,
the processing system further includes a collection apparatus that is configured to collect a substance generated by the irradiation with the plurality of energy beams through a collection port disposed at a position that is away from the melt pool,
a position that is away from a straight line, which include a line connecting the melt pool and the collection port, toward a direction intersecting with the straight line is irradiated with plurality of energy beams.

### [Supplementary Note 43]

The processing system according to any one of the Supplementary Notes 26 to 42 further including a wall member that forms a space in which the energy beam from the irradiation optical system propagates.

### [Supplementary Note 44]

The processing system according to any one of the Supplementary Notes 26 to 43 further including a gas supply apparatus that is configured to supply a gas to the space.

### [Supplementary Note 45]

The processing system according to the Supplementary Note 44 further including a material supply apparatus that is configured to supply a material from a supply port,
the gas supplied to the space flowing out from the space through a discharge port formed at the wall member near the supply port.

At least a part of the features of each embodiment described above may be properly combined with at least another a part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification. A processing system, which involves such changes, is also intended to be within the technical scope of the present invention.

### Description of Reference Codes

- SYS: processing system
- 1: material supply apparatus
- 2: processing light source
- 3: processing apparatus
- 31: processing head
- 311: irradiation optical system
- 3111: condensing optical system
- 32: head driving system
- 4: stage apparatus
- 41: stage
- 42: stage driving system
- 6: control apparatus
- W: workpiece
- M: build material
- SL: structural layer
- MS: build surface
- EL: processing light

## Claims

1. A processing system that is configured to process an object by using an energy beam, wherein
the processing system comprises:
an irradiation optical system that includes a condensing optical system and that is configured to condense the energy beam entering a pupil plane of the condensing optical system to irradiate the object with it; and
a detection apparatus that is configured to detect, through the condensing optical system, an object light including a light from the object,
at least a part of a path of the object light in the condensing optical system is different from at least a part of a path of the energy beam in the condensing optical system.

2. The processing system according to claim 1, wherein
the path of the object light in the condensing optical system does not overlap with the path of the energy beam in the condensing optical system.

3. The processing system according to claim 1 or 2, wherein
an area on the pupil plane through which the energy beam passes is different from an area on the pupil plane through which the object light passes.

4. The processing system according to claim 3, wherein
the area through which the energy beam passes does not overlap with the area through which the object light passes on the pupil plane.

5. The processing system according to any one of claims 1 to 4, wherein
the condensing optical system is configured to emit a plurality of energy beams from different directions relative to the object.

6. The processing system according to claim 5, wherein
the object is irradiated with the plurality of energy beams from positions that are different in a rotational direction around an optical axis of the condensing optical system.

7. The processing system according to claim 5 or 6, wherein
a first angle between a first energy beam of the plurality of energy beams and an optical axis of the condensing optical system is different from a second angle between a second energy beam of the plurality of energy beams and the optical axis.

8. The processing system according to any one of claims 1 to 7, wherein
the detection apparatus is configured to optically receive the object light propagating in an optical path that is different from optical paths through which the plurality of energy beams pass between the object and the condensing optical system.

9. The processing system according to any one of claims 1 to 8, wherein
the detection apparatus further includes an illumination apparatus that is configured to irradiate the object with an illumination light through the condensing optical system.

10. The processing system according to claim 9, wherein
an area on the object that is irradiated with the illumination light includes an area on the object that is irradiated with the energy beam.

11. The processing system according to claim 9 or 10, wherein
the object light includes the illumination light from the object.

12. The processing system according to any one of claims 1 to 11, wherein
the object light includes a light that is generated by irradiating the object with the energy beam.

13. The processing system according to claim 12, wherein
a melt pool is formed on the object by the energy beam from the condensing optical system,
the object light includes a light from the melt pool.

14. The processing system according to any one of claims 1 to 13, wherein
the detection apparatus includes an imaging apparatus.

15. The processing system according to any one of claims 1 to 14, wherein
a wavelength of the energy beam is different from a wavelength of the object light.

16. The processing system according to any one of claims 1 to 15, wherein
at least a part of a wavelength range of the energy beam overlaps with at least a part of a wavelength range of the object light.

17. The processing system according to any one of claims 1 to 16, wherein
the detection apparatus includes:
a light transmission part that is configured to transmit a measurement light to the object through the condensing optical system; and
a light reception part that is configured to optically receive, as at least a part of the object light, the measurement light from the object through the condensing optical system.

18. The processing system according to claim 17, wherein
an area on the object that is irradiated with the measurement light includes an area on the object that is irradiated with the energy beam.

19. The processing system according to claims 17 or 18, wherein
the measurement light from the object includes a scattering light from the object.

20. The processing system according to any one of claims 1 to 19 comprising a material supply apparatus that is configured to supply a material to a position on the object that is irradiated with the energy beam through an aperture that is formed at a final optical member included in the condensing optical system.

21. The processing system according to claim 20, wherein
at least a part of the material supply apparatus is disposed along an optical axis of the condensing optical system.

22. The processing system according to claim 20 or 21 comprising a gas supply apparatus that is configured to supply gas to a space between the optical members of the condensing optical system,
the condensing optical system including a plurality of optical members including the final optical member,
at least part of the gas is supplied to a space at an emitting plane side of the final optical member through the aperture.

23. The processing system according to claim 22 comprising a gas guide member that guides the gas from the aperture toward the object.

24. The processing system according to claim 23, wherein
the gas guide member surrounds at least a part of the material supply apparatus.

25. A processing system that is configured to process an object by using an energy beam, wherein
the processing system comprises:
an irradiation optical system that is configured to irradiate the object with a plurality of energy beams as the energy beam; and
a beam characteristic change apparatus that is configured to change a characteristic of at least one of the plurality of energy beams individually.

26. The processing system according to claim 25, wherein
the beam characteristic change apparatus is configured to change each of the characteristics of the plurality of energy beams.

27. The processing system according to claim 25 or 26, wherein
the beam characteristic change apparatus is configured to change the characteristic of one energy beam of the plurality of energy beams to be different from the characteristic of another energy beam that is different from the one energy beam.

28. A processing system that is configured to process an object by using an energy beam, wherein
the processing system comprises:
an irradiation optical system that is configured to irradiate the object with a plurality of energy beams as the energy beam; and
a beam characteristic change apparatus that is configured to change a characteristic of at least one of the plurality of energy beams,
the characteristic of a first energy beam of the plurality of energy beams being different from the characteristic of a second energy beam of the plurality of energy beams.

29. The processing system according to any one of claims 25 to 28, wherein
the beam characteristic change apparatus is configured to change the characteristic of the at least one energy beam based on a shape of the object.

30. The processing system according to any one of claims 25 to 29 comprising a movement apparatus that is configured to move at least one of the object and irradiation positions of the energy beams,
the beam characteristic change apparatus being configured to change the characteristic of the at least one energy beam based on a moving direction by the movement apparatus.

31. The processing system according to any one of claims 25 to 30, wherein
the beam characteristic change apparatus is configured to change a distribution of the energy beams on a surface of the object by changing the characteristic.

32. A processing system that is configured to process an object by using an energy beam, wherein
the processing system comprises:
an irradiation optical system that is configured to irradiate the object with a plurality of energy beams as the energy beam; and
a beam characteristic change apparatus that is configured to change a characteristic of at least one of the plurality of energy beams,
the beam characteristic change apparatus being configured to set the characteristic of a first energy beam of the plurality of energy beams to be different from the characteristic of a second energy beam of the plurality of energy beams.

33. A processing system that is configured to process an object by using an energy beam, wherein
the processing system comprises:
an irradiation optical system that is configured to irradiate the object with a plurality of energy beams as the energy beam; and
a beam characteristic change apparatus that is configured to set a characteristic of a first energy beam of the plurality of energy beams to be different from a characteristic of a second energy beam of the plurality of energy beams.

34. The processing system according to any one of claims 25 to 33, wherein
a plane on which the plurality of energy beams overlap with each other is away from a surface of the object.

35. The processing system according to any one of claims 25 to 34 further comprising a distance change apparatus that is configured to change a distance between a plane on which the plurality of energy beams overlap with each other and a surface of the object.

36. The processing system according to any one of claims 25 to 35, wherein
the irradiation optical system is configured to form a melt pool on the object by the plurality of energy beams,
a formed state of the melt pool is changed by changing a distribution of the at least one energy beam.

37. The processing system according to claim 36, wherein
the formed state of the melt pool includes a temperature distribution of the melt pool.

38. The processing system according to claim 36 or 37 comprising a detection apparatus that is configured to optically receive a light from the melt pool,
the characteristic of the at least one energy beam being changed based on a detected result by the detection apparatus.

39. The processing system according to any one of claims 25 to 38, wherein
the characteristic of the energy beam includes an intensity of the energy beam.

40. The processing system according to any one of claims 25 to 39, wherein
the characteristic of the energy beam includes an intensity distribution of the energy beam on the surface of the object.

41. A processing system that is configured to process an object by using an energy beam, wherein
the processing system comprises:
an irradiation optical system that is configured to irradiate the object with a plurality of energy beams as the energy beam; and
a distance change apparatus that is configured to a distance between a plane on which the plurality of energy beams overlap with each other and a surface of the object to thereby change a distribution of the energy beam on the surface of the object.

42. The processing system according to claim 41, wherein
the irradiation optical system includes a condensing optical system that is configured to condense the plurality of energy beams,
the plane on which the plurality of energy beams overlap with each other is located at a rear focal point position of the condensing optical system.

43. The processing system according to claim 41 or 42 further comprising a beam characteristic change apparatus that is configured to change a characteristic of at least one of the plurality of energy beams.

44. The processing system according to claim 43, wherein
the beam characteristic change apparatus is configured to change each of the characteristics of the plurality of energy beams.

45. The processing system according to any one of claims 41 to 44, wherein
the characteristic of the energy beam includes an intensity of the energy beam.

46. The processing system according to any one of claims 41 to 45, wherein
the material supply apparatus is configured to supply the material from a material supply direction that intersects with a surface of the object,
the material supply direction is a direction along which the distance change apparatus changes the distance.

47. The processing system according to any one of claims 41 to 46, wherein
the distance change apparatus is configured to change the distance based on a shape of the object.

48. The processing system according to any one of claims 41 to 47, wherein
the irradiation optical system is configured to form a melt pool on the object by the plurality of energy beams,
the distance change apparatus is configured to change a formed state of the melt pool by changing the distance.

49. The processing system according to claim 48 comprising a detection apparatus that is configured to optically receive a light from the melt pool,
the distance change apparatus is configured to change the distance based on a detected result by the detection apparatus.

50. The processing system according to any one of claims 41 to 49 comprising a movement apparatus that is configured to move at least one of the object and an irradiation positions of the energy beams,
the distance change apparatus is configured to change the distance based on a moving direction by the movement apparatus.

51. The processing system according to any one of claims 41 to 50, wherein
the characteristic of the energy beam includes an intensity distribution of the energy beam on the surface of the object.

52. The processing system according to any one of claims 1 to 51 performing an additive processing on the object.

53. The processing system according to any one of claims 1 to 52 performing a removal processing on the object.
